# EUROPEAN PATENT APPLICATION

(11) **EP 1 690 901 A1**
(43) Date of publication of application: **16.08.2006**
(21) Application number: 04818234.9
(22) Date of filing: 09.11.2004
(51) Int. Cl.: C09C 3/10, C09C 1/04, C09D 7/12, C09D 127/12, C09D 183/04, B32B 27/18

(54) **POWDER MATERIAL CONTAINING NEEDLE SINGLE CRYSTAL INORGANIC POWDER, COATING MATERIAL, LIQUID POWDER DISPERSION AND METHOD FOR USING THEM**

(30) Priority: 10.11.2003 JP 2003380368; 10.11.2003 JP 2003380369; 10.11.2003 JP 2003380370
(71) Applicant: KANSAI PAINT CO., LTD., Amagasaki-shi Hyogo 661-0964 (JP)
(72) Inventor: OHNISHI, Kazuhiko c/o Kansai Paint Co., Ltd., Hiratsuka-shi, Kanagawa 254-0016 (JP); FUJIBAYASHI, Toshio2c/o Kansai Paint Co., Ltd., Hiratsuka-shi, Kanagawa 254-0016 (JP); NOURA, Kohsuke c/o Kansai Paint Co., Ltd., Hiratsuka-shi, Kanagawa 254-0016 (JP)
(74) Representative: Stuart, Ian Alexander
(86) International application number: PCT/JP2004/016590
(87) International publication number: WO 2005/044926

(57) **Abstract**

The present invention relates to a resin-coated powder material prepared by coating at least one organic resin selected from a silicone resin and a fluorocarbon resin; a coating composition prepared by mixing a zinc oxide needle-like single-crystal inorganic powder with a silicone resin coating composition and/or fluorocarbon resin coating composition; and a substrate surface-modifying method which comprises coating an inorganic powder dispersion containing, as essential components, a needle-like single-crystal inorganic powder and a resin onto a plastics substrate or inorganic substrate to impart water-repellency to the surface of the substrate.

## Description

### Field of the Invention:

The present invention relates to a needle-like single-crystal inorganic powder-containing powder material, coating composition, powder dispersion, and method of using the same, more particularly to a needle-like single-crystal inorganic powder-containing resin-coated powder material, a coating composition containing the powder, a water-repellent coating film-forming method by use of the coating composition, a water-repellent coating product formed by the method, a substrate surface-modifying method by use of the powder containing inorganic powder dispersion, and a water-repellent coating product obtained by the method.

The resulting coating film and coating product shows good properties in stain resistance, fog resistance, anti-icing properties, weather resistance, water resistance, etc., and particularly in water-repellency.

### Background Art:

It is well known in the art to obtain a water-repellent component showing good properties in stain resistance, fog resistance, anti-icing properties, etc. by coating a water-repellent composition onto a component.
As the water-repellent composition, a water-repellent coating film-forming composition prepared by mixing a particulate matter having a mean particle size in the range of 5 µm or less with a polymer such as fluoroalkyl group-containing polymer, silicon-containing polymer and the like is well known in the art (see the following References 1, 2 and 3) .

A surface-treating solution (see the following Reference 4) containing an electrodepositable resin and a whisker and a curable fluoropolyether rubber composition (see the following Reference 5) containing a whisker having a fine fibrous shape of 0.2 to 2 µm in fiber diameter and 2 to 50 µm in fiber length are also well known in the art.
Further, a polycarbonate resin composition (see the following Reference 6) comprising polycarbonate polyorganosiloxane copolymer, polycarbonate resin and a tetrapod-like zinc oxide whisker is well known in the art.
Reference 1: Japanese Patent Application Laid-Open No. 8284/90
Reference 2: Japanese Patent Application Laid-Open No. 8285/90
Reference 3: Japanese Patent Application Laid-Open No. 8263/90
Reference 4: Japanese Patent Application Laid-Open No. 275393/02
Reference 5: Japanese Patent Application Laid-Open No. 248181/00
Reference 6: Japanese Patent Application Laid-Open No. 156170/93

### Disclosure of the Invention:

### Problems to be Solved:

Compositions disclosed in References 1, 2 and 3 relate to improvement of poor water-repellency of a polymer such as a fluoroalkyl group-containing polymer, silicon-containing polymer and the like by addition of a particulate matter of fine particles, for example, a hydrophobic silica to the polymer.
However, addition of the particulate matter of fine particles in a large amount may increase roughness of a coating film surface to reduce water repellency. On the other hand, addition in a small amount may make it impossible to obtain a satisfactory water repellency.

Reference 4 discloses a surface-treating solution containing a whisker, and discloses that a whisker not coated with an organic compound is mixed with an electrodepositable water-based polyimide solution for the purpose of imparting durability, abrasion resistance, etc. to a resulting coating film, resulting in making it impossible to impart water-repellency to the resulting coating film, resulting in that addition of a large amount of the whisker is necessary for the purpose of showing a satisfactory effect of water-repellency, but may reduce fabrication properties of the coating film, and resulting in making it impossible to obtain a coating film showing good properties in both water-repellency and fabrication properties.

In Reference 5, a whisker is added in a specified amount. However, a less amount may reduce hardness and tear strength of a cured fluoropolyether rubber coating film, and a more amount may result increase in viscosity, reduction in elongation and reduction in tensile strength, resulting making it difficult to balance therebetween.
Reference 6 discloses a polycarbonate resin composition containing a tetrapod-like zinc oxide whisker, which is added for the purpose of improving impact resistance and dimensional accuracy of polycarbonate-polyorganosiloxane copolymer, or more specifically improving performances in the case of performing injection molding, resulting in that addition of the whisker disclosed in Reference 6 can not impart water-repellency.

Firstly, it is an object of the present invention to provide a resin-coated powder material capable of imparting water-repellency onto the surface of a coating film without reducing fabrication properties and mechanical properties of the coating film.
Secondly, it is an object of the present invention to provide a coating composition capable of imparting water-repellency, stain resistance, fog resistance, anti-icing properties, etc. onto the surface of a coating film without reducing fabrication properties and mechanical properties of the coating film.
Thirdly, it is an object of the present invention to provide a substrate surface-modifying method which is capable of forming a coating film showing water-repellency without reducing fabrication properties and mechanical properties of the coating film.

That is, the present invention firstly provides:
1. A resin-coated powder material prepared by coating a resin onto a needle-like single-crystal inorganic powder,
2. A resin-coated powder material as defined in paragraph 1, wherein the resin is at least one organic resin selected from a silicone resin and a fluorocarbon resin,
3. A resin-coated powder material as defined in paragraph 1 or 2, wherein the needle-like single-crystal inorganic powder is a zinc oxide needle-like single-crystal inorganic powder,
4. A resin-coated powder material as defined in any one of paragraphs 1 to 3, wherein the needle-like single-crystal inorganic powder is in a three-dimensional shape having three or more needle-like crystal portions stretched in different directions from a core portion, and
5. A resin-coated powder material as defined in any one of paragraphs 1 to 4, wherein a coating amount of the resin relative to the needle-like single-crystal inorganic powder is such that the resin is in the range of 0.001 to 50 parts by weight per 100 parts by weight of the needle-like single-crystal inorganic powder (hereinafter may be referred to a first invention).

The present invention secondly provides:
6. A coating composition prepared by mixing a needle-like single-crystal inorganic powder with a silicone resin coating composition and/or fluorocarbon resin coating composition,
7. A coating composition as defined in paragraph 6, wherein the needle-like single-crystal inorganic powder is a zinc oxide needle-like single-crystal inorganic powder,
8. A coating composition as defined in paragraph 6 or 7, wherein the needle-like single-crystal inorganic powder is in a three-dimensional shape having three or more needle-like crystal portions stretched in different directions from a core portion,
9. A water-repellent coating film-forming method, which comprises coating the coating composition as defined in any one of paragraphs 6 to 8 as a topcoat coating composition onto a substrate to form a water-repellent coating film, and
10. A water-repellent coating product having a topcoat water-repellent coating film formed by the water-repellent coating film-forming method as defined in paragraph 9 (hereinafter may be referred to as a second invention).

The present invention thirdly provides:
11. A substrate surface-modifying method, which comprises coating an inorganic powder dispersion containing, as essential components, a needle-like single crystal inorganic powder and a resin onto a substrate to impart water-repellency to the surface of the substrate,
12. A substrate surface-modifying method as defined in paragraph 11, wherein the substrate is a plastics substrate and/or inorganic substrate,
13. A substrate surface-modifying method as defined in paragraph 11, wherein the needle-like single-crystal inorganic powder is a zinc oxide needle-like single-crystal inorganic powder,
14. A substrate surface-modifying method as defined in any one of paragraphs 11 to 13, wherein the needle-like single-crystal inorganic powder is in a three-dimensional shape having three or more needle-like crystal portions stretched in different directions from a core portion,
15. A substrate surface-modifying method as defined in any one of paragraphs 11 to 14, wherein the resin used in the inorganic powder dispersion is a silicone resin and/or fluorocarbon resin,
16. A substrate surface-modifying method as defined in any one of paragraphs 11 to 15, wherein the resin used in the inorganic powder dispersion is a curable resin,
17. A substrate surface-modifying method as defined in any one of paragraphs 11 to 16, wherein the plastics substrate or the inorganic substrate is composed of a curable resin coating film,
18. A substrate surface-modifying method as defined in any one of paragraphs 11 to 17, wherein the curable resin coating film prior to coating the inorganic powder dispersion is an uncured coating film, and the uncured coating film is cured after coating the inorganic powder dispersion,
19. A substrate surface-modifying method as defined in any one of paragraphs 11 to 18, wherein the resin used in the inorganic powder dispersion is a curable resin, the substrate is a curable resin coating film, which is an uncured coating film prior to coating the inorganic powder dispersion, and coating of the inorganic powder dispersion is followed by simultaneously curing the uncured curable resin coating film and the curable resin, and
20. A water-repellent coating product having a topcoat water-repellent coating film formed by the method as defined in any one of paragraphs 11 to 19 (hereinafter may be referred to as a third invention).

### Effect of the Invention:

According to the first invention, addition of the resin-coated powder material to a coating composition results a rich amount of the needle-like single-crystal inorganic powder component in the surface of the coating film, resulting in making it possible to impart good water-repellency to the surface of the coating film. Particularly, the use of the silicone resin, fluorocarbon resin, or mixtures thereof as the resin can further improve the above water-repellency.
Further, use of a tetrapod-shaped needle-like single-crystal inorganic powder results in ejecting the needle-like portions to the surface of the coating film regardless of any orientation of the powder, and in effectively showing water-repellency.

According to the second invention, the use of the three dimensionally-shaped needle-like single-crystal inorganic powder having three or more needle-like crystal portions stretched in different directions from the core portion results in ejecting the needle-like portions to the surface of the coating film regardless of any orientation of the powder, and in effectively showing water-repellency, stain resistance, fog resistance, anti-icing properties, etc.
The use of a resin having a low polarity, for example, the silicone resin, fluorocarbon resin, etc., as a resin component of the coating composition shows good wetting to the needle-like, single-crystal inorganic powder, resulting in showing good coating maintenance properties.

Further, combinations of good properties in water-repellency, stain resistance, fog resistance, and anti-icing properties of the resin itself with good properties in water-repellency, stain resistance, fog resistance and anti-icing properties of the needle-like single-crystal inorganic powder may synergetically improve water-repellency, stain resistance, fog resistance, and anti-icing properties.
According to the third invention, the use of the three-dimensionally-shaped needle-like single-crystal inorganic powder having three or more needle-like crystal portions stretched in different directions from the core portion results in ejecting the needle-like portions to the surface of the coating film regardless of any orientation of the powder, and in effectively showing water-repellency.

The use of a resin having a low polarity, for example, the silicone resin, fluorocarbon resin, etc., as a resin component of the coating composition shows good wetting to the needle-like single-crystal inorganic powder, resulting in showing good coating maintenance properties. Further, the use of the silicone resin and fluorocarbon resin results in that combinations of good water-repellency of the resin itself with water-repellency of the needle-like single-crystal inorganic powder may synergetically improve water-repellency.
The use of a coating composition containing a volatile solvent such as water and organic solvent as the surface-modifying coating composition results in that loss of volume due to volatilization of the solvent after coating causes the needle-like single-crystal inorganic powder to project to the surface of the coating film to effectively show water-repellency.

### Brief Description of the Drawing:

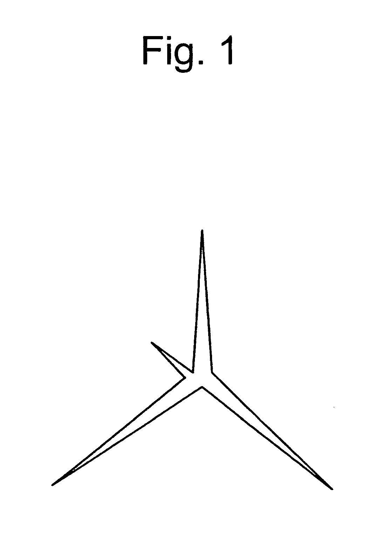

[Fig. 1] Fig. 1 is a three-dimensional enlarged schematic view of the needle-like single-crystal inorganic powder used in Examples.

### The Most Preferable Embodiment of the Invention:

The first invention is described hereinafter.
The needle-like single-crystal inorganic powder used in the resin-coated powder material of the first invention may include fibrous-shaped ones and three-dimensional-shaped ones having three or more needle-like crystal portions stretched in different directions from the core portion. The fibrous-shaped needle-like single-crystal inorganic powder may include, for example, fine fibrous-shaped ones having a fiber diameter in the range of 0.01 to 10 µm on an average, preferably 0.05 to 8 µm on an average, and a short fiber length in the range of 1 to 100 µm on an average, preferably 2 to 80 µm on an average. A fiber diameter less than 0.01 µm on an average may result unsatisfactory water-repellency and poor workability. On the other hand, a fiber diameter more than 10 µm on an average results in that such a large amount of the powder as to be impractical is needed, and that an increased diameter after being coated with the resin may result unsatisfactory water-repellency. A short fiber length less than 1 µm on an average may result unsatisfactory water-repellency and poor workability. On the other hand, a short fiber length more than 100 µm on an average may result in that a resin coating film thickness may become thinner to a tip portion of the needle-like crystal portion with unsatisfactory water-repellency as well as reduction in water resistance, weather resistance, chemical resistance, etc., at the tip portion of the needle-like crystal portion.

The fine fibrous-shaped needle-like single-crystal inorganic powder may include, without particular limitations, a metal needle-like single-crystal inorganic powder such as chrome, copper, iron, nickel and the like, an inorganic non-oxide needle-like single crystal inorganic powder such as silicon carbide, graphite, silicon nitride and the like, an inorganic oxide needle-like single-crystal inorganic powder such as alumina, potassium titanate, wollastonite, aluminum borate, zinc oxide and the like, etc., preferably the inorganic oxide needle-like single-crystal inorganic powder from the standpoints of water-repellency and fabrication properties.

The three dimensional-shaped needle-like single-crystal inorganic powder having three or more needle-like crystal portions stretched in different directions from a core portion may preferably include a tetrapod-shaped needle-like single-crystal inorganic powder composed of the core portion and four needle-like crystal portions stretched in different directions from the core portion. The fine tetrapod-shaped needle-like single-crystal inorganic powder may include, without particular limitations, a metal needle-like single-crystal inorganic powder such as chrome, copper, iron, nickel and the like, an inorganic non-oxide needle-like single crystal inorganic powder such as silicon carbide, graphite, silicon nitride and the like, an inorganic oxide needle-like single-crystal inorganic powder such as alumina, potassium titanate, wollastonite, aluminum borate, zinc oxide and the like, etc., preferably the inorganic oxide needle-like single-crystal inorganic powder from the standpoints of water-repellency, stain resistance, fog resistance, anti-icing properties, and fabrication properties.

A size of the tetrapod-shaped needle-like single-crystal inorganic powder, without particular limitations, is such that a base portion of the needle-like crystal portion has a diameter of 0.01 to 100 µm, preferably 0.1 to 80 µm, and a length from the base portion to a tip is in the range of 1 to 200 µm, preferably 2 to 150 µm. Generally, a diameter of the base portion of the needle-like crystal portion less than 0.01 µm may result distortion during coating the resin. When more than 100 µm, a more proportion occupied by the base portion and a less proportion occupied by the needle-like portion may result unsatisfactory water-repellency. A length from the base portion to the tip less than 1 µm may result unsatisfactory water-repellency. When more than 200 µm, distortion during coating the resin and unevenness in resin coating film thickness between the tip portion and the base portion may result unsatisfactory water-repellency.

In the resin-coated powder material of the first invention, the resin to be coated onto the surface of the needle-like single-crystal inorganic powder may include, without particular limitations, an inorganic resin, an organic resin and mixtures thereof as known in the art.
The resin to be coated may include a liquid resin of 100% liquid per se, a diluted solid resin prepared by dissolving or dispersing a solid resin per se into a liquid solvent, and a diluted liquid resin prepared by dissolving or dispersing a liquid resin per se into a liquid solvent.

The resin to be coated a non-curable resin and a curable resin.
The resin coated onto the powder material is, as needed, subjected to a drying treatment of the liquid solvent, or to a curing treatment of the curable resin, so that the resin coated onto the powder material may finally have no stickiness at 20°C or higher, particularly at 40°C or higher.

The inorganic resin may include any resins known in the art, for example, alkali-type silicate resin, alkyl silicate resin, etc.
To the above resin may be added an acid catalyst, basic catalyst and salt as a curing agent or as a curing catalyst as known in the art.
A non-crosslinkable organic resin may include resins known in the art, for example, silicone resin, fluorocarbon resin, acrylic resin, polyester resin, alkyd resin, epoxy resin, phenol resin, polyurethane resin, amino resin, cellulose resin, polyvinyl chloride resin, vinyl acetate resin, polyethylene resin, mixtures thereof, modified resins prepared by chemically bonding at least two of the above resins.

A curable organic resin may include known curable resins, for example, amino-curing resin, isocyanate-curing resin, acid•epoxy-curing resin, hydrolyzable silane-curing resin, hydroxyl group•epoxy group-curing resin, hydrazine-curing resin, oxidative polymerization-curing resin, photo(heat)radical polymerization type resin, photo(heat)cationic polymerization type resin, and curable resins prepared by combining at least two of the above resins. Optionally, known additives for curing, for example, curing agent, curing catalyst, curing promotor etc., may be added to the curable resins.

The curable resin coated onto the needle-like single-crystal inorganic powder is such that the curable resin may be cured on preparing the powder to obtain a cured resin-coated powder material, or a curable resin-coated powder material is prepared without curing the curable resin on preparing the powder, and then a composition prepared by adding the powder is subjected to a curing treatment, for example, heat treatment, actinic ray irradiation treatment to cure the curable resin coated on the powder.

A coated proportion of the resin to the needle-like single-crystal inorganic powder is such that the resin as solid content is in the range of 0.001 to 50 parts by weight, preferably 0.01 to 30 parts by weight per 100 parts by weight of the needle-like single-crystal inorganic powder.
A resin less than 0.001 part by weight may reduce effects of water-repellency. On the other hand, a resin more than 50 parts by weight may reduce water-repellency, coating film performances, etc.

A method of coating the resin onto the powder material may include, for example, (1) a method which comprises mixing and dispersing a solution prepared by dissolving or dispersing a coating resin into a solvent and a needle-like single-crystal inorganic powder, followed by subjecting to vacuumizing or spray coating optionally while heating or mixing to volatilize and remove the solvent, and to a resin-coated powder material, (2) a method which comprises dry mixing a needle-like single-crystal inorganic powder and a coating resin fine powder and heating at such a temperature that the coating resin may fuse or melt to fuse the resin on the surface of the inorganic powder.

### Method (1):

The solvent used in the method (1) may include, without particular limitations, any solvent capable of dissolving or dispersing the coating resin such as the above inorganic resin, non-crosslinkable resin and curable resin as known in the art.
The above solvent may specifically include, for example, (1) a hydrocarbon solvent such as hexane, heptane, octane, 2,2,3-trimethylpentane, isooctane, nonane, 2,2,5-trimethylhexane, decane, dodecane, unsaturated aliphatic hydrocarbon, benzene, toluene, xylene, cyclopentane, cyclohexane, methylcyclohexane, petroleum naphtha and the like; (2) halogenated hydrocarbon solvent such as dichloromethane, chloroform, carbon tetrachloride and the like; (3) alcohol solvent such as methanol, ethanol, n-propanol, isopropanol, neopentylalcohol, hexanol, heptanol, octanol, allyl alcohol, benzyl alcohol, cyclohexanol and the like; (4) ether solvent such as diethyl ether, dipropyl ether, dibutyl ether, ethyl vinyl ether, methoxytoluene, diphenyl ether, dioxane, propylene oxide, cellosolve, methylcellosolve and the like; (5) ketone solvent such as acetone, methyl ethyl ketone, 2-pentanone, 2-hexanone, methyl isobutyl ketone, isophorone, cyclohexanone and the like; (6) ester solvent such as methyl acetate, ethyl acetate, propyl acetate, butyl acetate, isobutyl acetate, pentyl acetate, 3-methoxybutyl acetate, 2-ethylhexyl acetate, benzyl acetate, and the like; (7) others; pyridine, formamide, N,N-dimethylformamide, acetoamide, 2-pyrrolidone, N,N-dimethyl acetoamide, carbon disulfide, dimethyl sulfide, diethyl sulfide, thiophene, tetrahydrothiophene, dimethylsulfoxide; (8) water; and the like.

A mixing amount of the coating resin with the solvent is such that, for example, a solid content is 0.01 to 50% by weight, preferably 0.1 to 30% by weight. A solid content less than 0.01% by weight takes efforts and time for removing the solvent, and results an unsatisfactory coating amount. On the other hand, a solid content more than 50% by weight may result a non-coated area, fusion and agglomeration between powders on drying.
A mixing amount of the needle-like single-crystal inorganic powder with the coating resin-solvent solution is such that the needle-like single-crystal inorganic powder is 0.1 to 50% by weight, particularly 1 to 40% by weight based on a total weight of both components. An amount less than 0.1% by weight may result unsatisfactory coating amount. On the other hand, an amount more than 50% by weight may result a non-coated area, and fusion and agglomeration between powders on drying.

Mixing of the needle-like single-crystal inorganic powder with the coating resin-solvent solution may be performed by use of a mixer or a disper known in the art so that defects such as distortion, crushing, and cracks of the needle-like single-crystal inorganic powder may not be developed on mixing and dispersing.
A method of removing the solvent from a needle-like single-crystal inorganic powder-dispersed coating resin-solvent solution may include, for example, a method of remove under vacuum optionally while heating, and a method of spraying the above solution into a closed booth optionally while heating to separate the solution from the coating resin, needle-like single-crystal inorganic powder.

In addition to the above methods, the method may include a method which comprises adding a flocculant such as a poor solvent having no solubility to the coating resin and a flocculant used in a waste water treatment to the needle-like single-crystal inorganic powder-dispersed coating resin-solvent solution to obtain an agglomerate of the resin-coated powder material, followed by removing the solvent under vacuum optionally while heating.

### Method (2)

In the method (2), the coating resin to be coated onto the needle-like single-crystal inorganic powder may preferably include such a resin that the resin per se is a fine powder, and that the resin powders do not fuse or melt together on dry mixing both components by use of a disper or Henschel mixer, and are fused onto the inorganic powder by heating. The above resin may include a resin used in the powder coating composition known in the art and a powder coating composition. A fine particle size of the above resin as a mean particle size is 0.01 to 100 µm, preferably 0.1 to 80 µm. When a mean particle size is less than 0.01 µm, a poor powder flowability on dry mixing makes a uniform mixing impossible. On the other hand, a mean particle size more than 100 µm makes a satisfactory coating of the inorganic powder impossible.

In the above mixing, the dry mixing is performed at a temperature less than about 40°C, preferably less than about 30°C, and heating is performed at a temperature of about 40°C or higher, preferably about 50°C or higher. Fusion of the resin by heating onto the inorganic powder is followed by cooling and keeping at such a temperature that the resin may not be fused. As above, a step of mixing and dispersing the needle-like single-crystal inorganic powder and the coating resin, a following step of fusing and melting, and a following step of cooling may be performed continuously or discontinuously by use of a separate apparatus.

The resulting resin-coated powder material may optionally be ground to such an extent that the needle-like single-crystal inorganic powder may not result defects such as distortion, crushing, cracks and the like.
In the above methods (1) and (2), in the case where a curable resin is used as the resin to coat the needle-like single-crystal inorganic powder, curing of the resin may be performed during the step of the method (1) or (2), or after preparing a coated needle-like single-crystal inorganic powder by curing the coated resin. The resin may be cured by heating a heat-curable resin, or by irradiation of actinic rays such as visible light, ultraviolet rays, infrared rays, and radiation.

A curable resin-coated powder material may be mixed with a curable resin composition, followed by coating or molding, and by simultaneously curing the curable resin coated onto the inorganic powder and the curable resin composition.
Further, a resin component to be coated onto the needle-like single-crystal inorganic powder may be used as a curing agent component of a curable resin composition of a coating composition or a molded material containing the resin component, and after coating or molding the curing agent component may be crosslinked with a curable resin to be added to the coating composition or molding material.

A liquid resin may be used as the resin to be coated onto the needle-like single-crystal inorganic powder in the resin-coated powder material of the present invention, provided that the powder material coated with the resin does not stick together and adhered to each other, or that the powder material may agglomerate with each other to such an extent as to be broken down by a slight power.
The resin-coated powder material of the first invention may optionally include a colorant having white color, blue color, green color, black color, yellow color, violet color, red color, mixed colors thereof, or the like.
These colorants may impart beautiful appearance to the coating film and molded product.

In addition to the above, the resin-coated powder material of the first invention may optionally include ultraviolet light absorber, ultraviolet light stabilizer, antiseptic agent, mildew proofing agent, and the like as known in the art.
The resin to be coated onto the needle-like single-crystal inorganic powder in the resin-coated powder material of the first invention may preferably include at least one organic resin selected from a silicone resin and fluorocarbon resin.

Preferable examples of the above resins are explained in the following.
In the first invention, (co)polymer means polymer or copolymer.

### (I) Silicone Resin

(1) (Co)polymer of (a) silicon-containing polymerizable unsaturated monomer and optionally (b) other unsaturated monomer copolymerizable with the monomer (a) (specifically see Japanese Patent Application Laid-Open No. 8263/90).

Silicone-containing polymerizable unsaturated monomer (a) may include, for example, vinyltrimethoxysilane, vinyltriethoxysilane, γ-acryloxypropyltrimethoxysilane, γ-methacryloxypropyltrimethoxysilane, γ-acryloxypropylmethyldimethoxysilane, γ-methacryloxypropylmethyldimethoxysilane, vinylmethyldimethoxysilane, vinylmethylethoxysilane, γ-methacryloxypropyldimethylmethoxysilane, and the like.

Other unsaturated monomer (b) may include, for example, C₁₋₂₄ alkyl or cycloalkyl ester of (meth)acrylic acid such as methyl(meth)acrylate, ethyl(meth)acrylate, butyl(meth)acrylate, cyclohexyl(meth)acrylate, 2-ethylhexyl(meth)acrylate, lauryl(meth)acrylate, stearyl(meth)acrylate, decylacrylate, and the like; acrylic acid, methacrylic acid; C₂₋₄ hydroxyalkyl ester such as hydroxyethyl(meth)acrylate, hydroxypropyl (meth) acrylate and the like; functional (meth)acrylamide such as (meth)acrylamide, N-methyl(meth)acrylamide, N-ethyl(meth)acrylamide, diacetone acrylamide, N-methylol(meth)acrylamide, N-butoxymethyl acrylamide, and the like; glycidyl group-containing vinyl monomer such as glycidylmethacrylate, glycidyl methacrylamide, allyl glycidyl ether, and the like; vinyl monomer such as styrene, vinyltoluene, vinyl propionate, α-methylstyrene, vinyl acetate, (meth)acrylonitrile, vinyl pivarate, Veova monomer (trade name, marketed by Shell Chemicals Japan Ltd.), and the like; and the like.

A number average molecular weight of the (co)polymer is in the range of 4,000 to 200,000, preferably 8,000 to 70,000.
(2) A graft copolymer prepared by copolymerizing a curable group-containing acrylic (co)polymer (c) having a radically polymerizable unsaturated bond moiety through an urethane linkage and soluble in an organic solvent, an one end radically polymerizable polysiloxane (d), and optionally a radically polymerizable monomer (e) other than components (c) and (d) (specifically see a graft copolymer disclosed in Japanese Patent Application Laid-Open No. 136221/00).

The curable group-containing acrylic (co)polymer (c) may be prepared by reacting a curable group-containing acrylic (co)polymer (A-1) having hydroxyl group and soluble in an organic solvent with a radically polymerizable monomer (A-2) having isocyanate group.
The curable group-containing acrylic (co)polymer (A-1) having hydroxyl group and soluble in the organic solvent may be composed of at least a hydroxyl group-containing monomer and (meth)acrylic esters without particular limitations. The curable group is a group used in reacting a graft copolymer with a curing agent to form a cured coating film, etc., and is explained hereinafter. Specific examples of the hydroxyl group-containing monomer may include, for example, 2-hydroxyethyl (meth)acrylate, 3-hydroxypropyl (meth)acrylate, 4-hydroxybutyl (meth)acrylate, 2-hydroxypropyl (meth)acrylate, glycerin mono(meth)acrylate, polyethylene glycol mono(meth)acrylate, polypropylene glycol mono(meth)acrylate, or a ε-caprolactone adduct thereof, hydroxyalkyl esters of α,β-ethylenically unsaturated carboxylic acid such as (meth)acrylic acid, crotonic acid, maleic acid, fumaric acid, itaconic acid or citraconic acid, an adduct of the above α,β-ethylenically unsaturated carboxylic acid with ε-caprolactone, an adduct of the above α,β-ethylenically unsaturated carboxylic acid with an epoxy compound such as butyl glycidyl ether, phenyl glycidyl ether, glycidyl ester of branched monocarboxylic acid (Cardura E; trade name, marketed by Shell Chemicals Japan Ltd.) and the like, p-hydroxystyrene, p-hydroxymethylstyrene, and the like.

Specific examples of the (meth)acrylic esters may include the same ones as other unsaturated monomer (b) as above mentioned. A hydroxy value of the curable group-containing acrylic (co)polymer (A-1) having hydroxyl group and soluble in the organic solvent is preferably 5 to 250, more preferably 10 to 200, far more preferably 20 to 150. A hydroxy value less than 5 may extremely reduce an introduced amount of the isocyanate group-containing radically polymerizable monomer (A-2) and reduce a graft point, resulting in that a reaction mixture may become cloudy on graft copolymerization and be separated to two layers with time. On the other hand, a hydroxy value more than 250 may result a poor compatibility with an one end radically polymerizable polysiloxane (B) as mentioned after, resulting in that graft copolymerization may not take place. The curable group-containing acrylic (co)polymer (A-1) having hydroxyl group and soluble in the organic solvent may has an acid value.

The curable group-containing acrylic (co)polymer (A-1) having hydroxyl group and soluble in the organic solvent has a number average molecular weight of preferably 3,000 to 30,000, more preferably 5,000 to 20,000. A number average molecular weight less than 3,000 may reduce weather resistance and chemical resistance. On the other hand, a number average molecular weight more than 30,000 may result gelation on polymerization.

The isocyanate group-containing radically polymerizable monomer (A-2) may include, without particular limitation, ones containing isocyanate group and a radically polymerizable moiety, preferably ones containing, for example, at least one selected from methacryloyl isocyanate, 2-isocyanatoethyl (meth)acrylate, and m- or p-isopropenyl-α,α-dimethylbenzyl isocyanate.

A reaction of the curable group-containing acrylic (co)polymer (A-1) having hydroxyl group and soluble in the organic solvent with the isocyanate group-containing radically polymerizable monomer (A-2) for the preparation of the radically polymerizable acrylic polymer (A) may be carried out under such conditions that the isocyanate group-containing radically polymerizable monomer (A-2) may be used in an amount of preferably 0.001 mole or more, but less than 0.1 mole, more preferably 0.01 mole or more, but less than 0.08 mole. The isocyanate group-containing radically polymerizable monomer (A-2) less than 0.001 mole may make graft copolymerization difficult, resulting in that a reaction mixture may become cloudy and be separated to two layers with time. When 0.1 mole or more, gelation may take place on graft copolymerization. The reaction of the curable group-containing acrylic (co)polymer (A-1) having hydroxyl group and soluble in the organic solvent with the isocyanate group-containing radically polymerizable monomer (A-2) may be carried out at a temperature of room temperature to 80°C in the presence of, or in the absence of a catalyst.

The radically polymerizable acrylic polymer (A) may be used in an amount of 2 to 66% by weight, preferably 5 to 50% by weight based on a total amount of respective components used. An amount less than 2% by weight may reduce water drop-sliding properties, water repellency and stain resistance. When more than 66% by weight, gelation may take place on graft copolymerization.
One end radically polymerizable polysiloxane (d): a monomer represented by the following general formula (1):
General formula (1)

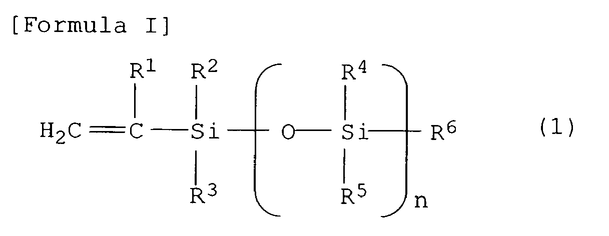

where R¹ is hydrogen atom or hydrocarbon group having 1 to 10 carbon atoms, R², R³, R⁴, R⁵ and R⁶ are same or different, and hydrogen atom or hydrocarbon group having 1 to 10 carbon atoms, and n is an integer of 2 or more.
In the formula (1), R¹ is hydrogen atom or hydrocarbon group having 1 to 10 carbon atoms. The hydrocarbon group having 1 to 10 carbon atoms may include, for example, alkyl group having 1 to 10 carbon atoms such as methyl group, ethyl group, propyl group, butyl group, pentyl group, and hexyl group, aryl group having 6 to 10 carbon atoms such as phenyl group, cycloalkyl group having 3 to 10 carbon atoms such as cyclohexyl group, and the like. R¹ is preferably hydrogen atom or methyl group. In the general formula (1), R², R³, R⁴, R⁵ and R⁶ are same or different to each other. R², R³, R⁴ and R⁵ are preferably methyl group or phenyl group independently. R⁶ is preferably methyl group, butyl group or phenyl group. In the general formula (1), n is an integer of 2 or more, preferably 10 or more, more preferably 30 or more.

One end radically polymerizable polysiloxane (d) may also be a monomer represented by the general formula (2):

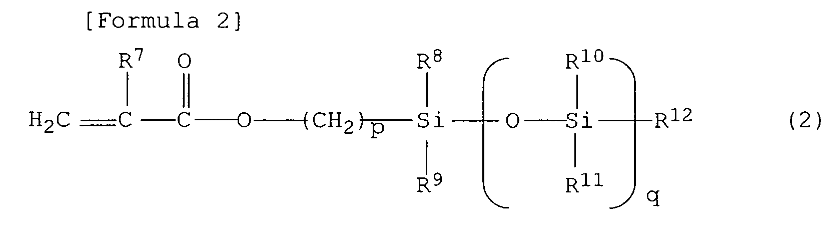

where R⁷ is hydrogen atom or hydrocarbon group having 1 to 10 carbon atoms, R⁸, R⁹, R¹⁰, R¹¹ and R¹² are same or different to each other, and are hydrogen atom or hydrocarbon group having 1 to 10 carbon atoms, p is an integer of 0 to 10, q is an integer of 2 or more.
In the general formula (2), R⁷ is hydrogen atom or hydrocarbon group having 1 to 10 carbon atoms, preferably methyl group. In the general formula (2), R⁸, R⁹, R¹⁰, R¹¹ and R¹² are same or different to each other. R⁸, R⁹, R¹⁰ and R¹¹ are preferably methyl group or phenyl group independently, and R¹² is preferably methyl group, butyl group or phenyl group. In the general formula (2), p is an integer of 0 to 10, preferably 3. In the general formula (2), q is an integer of 2 or more, preferably 10 or more, more preferably 30 or more.

The one end radically polymerizable polysiloxane (d) may be prepared by a known method, and may include commercially available ones, for example, Silaplain FM-0711 (number average molecular weight 1000, trade name, marketed by Chisso Corporation), Silaplain FM-0721 (number average molecular weight 5000, trade name, marketed by Chisso Corporation), Silaplain FM-0725 (number average molecular weight 10000, trade name, marketed by Chisso Corporation), X-22-174DX (number average molecular weight 4600, trade name, marketed by Shinetsu Chemical Co., Ltd.), and the like.

The radically polymerizable monomer (e) may include the same ones as in the other unsaturated monomer (b).
The graft copolymer has, without particular limitation, a number average molecular weight of 5,000 to 200,000, preferably 8,000 to 100,000.
The graft copolymer may include a curing agent, for example, melamine resin, isocyanate prepolymer, and blocked isocyanate prepolymer. The use of the curing agent may improve water drop-sliding properties, water repellency and stain resistance.

### (2) Fluorocarbon resin

(1) The fluorocarbon resin may include a (co)polymer of a fluoroalkyl group-containing polymerizable unsaturated monomer (f) and optionally other unsaturated monomer (g) copolymerizable with the above monomer (f), and specifically the (co)polymers disclosed in Japanese Patent Application Laid-Open No. 8285/90.
The fluoroalkyl group-containing polymerizable unsaturated monomer (f) may include perfluoroalkyl (meth)acrylate having C₁₋₂₀ perfluoroalkyl group such as perfluorononylethyl (meth)acrylate, perfluorodecylethyl (meth)acrylate, perfluorobutylethyl (meth)acrylate, perfluoromethylmethyl (meth)acrylate, perfluorobutylmethyl (meth)acrylate, perfluorooctylmethyl (meth)acrylate, perfluorodecylmethyl (meth)acrylate, perfluoromethylpropyl (meth)acrylate, perfluoropropylpropyl (meth)acrylate, perfluorooctylpropyl (meth)acrylate, perfluorooctylamyl (meth)acrylate, perfluorooctylundecyl (meth)acrylate, and the like.

The other unsaturated monomer (g) may include the same ones as the other unsaturated monomer (b).
The (co)polymer has a number average molecular weight of 4,000 to 200,000, preferably 8,000 to 70,000.

### (3) Silicone Fluorocarbon Resin

(1) The silicone fluorocarbon resin may include a copolymer of the silicon-containing polymerizable unsaturated monomer (a) as above mentioned, the fluoroalkyl group-containing polymerizable unsaturated monomer (f) as above mentioned, and optionally other unsaturated monomer (h) copolymerizable with the monomer, and specifically copolymers disclosed in Japanese Patent Application Laid-Open No. 8284/90.

The other unsaturated monomer (h) may include the same ones as the other unsaturated monomer (b) as above mentioned.
The above copolymer has a number average molecular weight of 4,000 to 200,000, preferably 8,000 to 70,000.
A mixing amount of the silicon-containing polymerizable unsaturated monomer (a) with the fluoroalkyl group-containing polymerizable unsaturated monomer (h) is such that a (a)/(f) weight ratio is 95/5 to 5/95, preferably 90/10 to 10/90.

(2) The silicone fluorocarbon resin may also include a graft copolymer prepared by copolymerizing an organic solvent-soluble fluorocarbon resin (i) having a radically polymerizable unsaturated bond moiety through an urethane linkage, the one end radically polymerizable polysiloxane (d), and the radically polymerizable monomer (e) reactive with the organic solvent-soluble fluorocarbon resin (i) having the radically polymerizable unsaturated bond moiety through urethane linkage solely by polymerization reaction due to a double bond under the conditions of a radical polymerization reaction, and specifically the graft copolymer disclosed in Japanese Patent Application Laid-Open No. 119354/00.

The organic solvent-soluble fluorocarbon resin (i) may be prepared, for example, by reacting a hydroxyl group-containing organic solvent-soluble fluorocarbon resin (B-1) and an isocyanate group-containing radically polymerizable monomer (B-2).
The hydroxyl group-containing organic solvent-soluble fluorocarbon resin (B-1) may include, for example, ones containing, as components, at least a hydroxyl group-containing monomer moiety and a polyfluoroparaffin moiety without particular limitation, and may contain, for example, a repeating unit represented by the general formula (3):

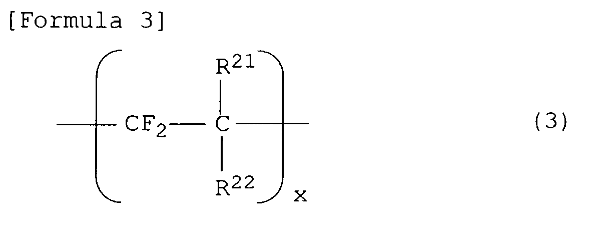

where R²¹ and R²² are independent per the repeating unit and same or different, hydrogen atom, halogen atom such as fluorine atom or chlorine atom, alkyl group having 1 to 10 carbon atoms, for example, methyl group or ethyl group, aryl group having 6 to 8 carbon atoms such as phenyl group, alkyl group having 1 to 10 carbon atoms substituted with at least one halogen atom such as fluorine atom or chlorine atom, for example, trifluoromethyl group, 2,2,2-trifluoroethyl group or trichloromethyl group, or C₆₋₈ aryl group substituted with at least one halogen atom such as fluorine or chlorine, for example, pentafluorophenyl group, and x is an integer of 2 or more; and may include a repeating unit represented by the general formula (4):

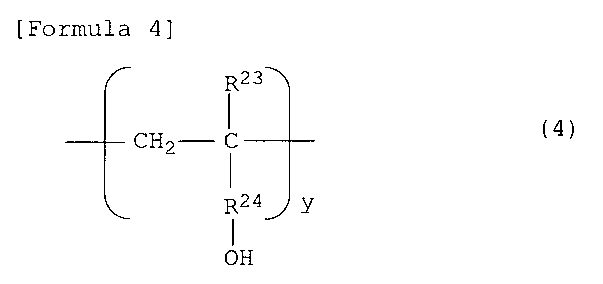

where R²³ is independent per the repeating unit, hydrogen atom, halogen atom such as fluorine atom or chlorine atom, alkyl group having 1 to 10 carbon atoms, for example, methyl group or ethyl group, aryl group having 6 to 8 carbon atoms such as phenyl group, alkyl group having 1 to 10 carbon atoms substituted with at least one halogen atom such as fluorine atom or chlorine atom, for example, trifluoromethyl group, 2,2,2-trifluoroethyl group or trichloromethyl group, or C₆₋₈ aryl group substituted with at least one halogen atom such as fluorine or chlorine, for example, pentafluorophenyl group, and R²⁴ is independent per the repeating unit, and is a bivalent group selected from OR25a group, CH2OR25b group, and COOR25c group, R25a, R25b and R25c are a bivalent group selected from alkylene group having 1 to 10 carbon atoms such as methylene group, ethylene group, trimethylene group, tetramethylene group, or hexamethylene group, cycloalkylene group having 6 to 10 carbon atoms such as cyclohexylene group, alkylidene group having 2 to 10 carbon atoms, such as isopropylidene group, and bivalent group, and group having 6-10 carbon atoms, y is an integer of 2 or more.

The hydroxyl group-containing organic solvent-soluble fluorocarbon resin (B-1) may contain, as a component, a repeating unit represented by the following general formula (5), for example, as the case may be.

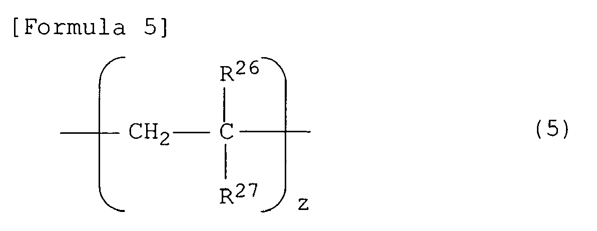

where R²⁶ is independent per the repeating unit, hydrogen atom, halogen atom such as fluorine atom or chlorine atom, alkyl group having 1 to 10 carbon atoms, for example, methyl group or ethyl group, aryl group having 6 to 10 carbon atoms such as phenyl group, alkyl group having 1 to 10 carbon atoms substituted with at least one halogen atom such as fluorine atom or chlorine atom, for example, trifluoromethyl group, 2,2,2-trifluoroethyl group or trichloromethyl group, or C₆₋₈ aryl group substituted with at least one halogen atom such as fluorine or chlorine, for example, pentafluorophenyl group, and R²⁷ is independent per the repeating unit, and is OR28a or OCOR28b, and R28a and R28b are hydrogen atom, halogen atom such as fluorine atom or chlorine atom, alkyl group having 1 to 10 carbon atoms, for example, methyl group or ethyl group, aryl group having 6 to 10 carbon atoms such as phenyl group, cycloalkyl group having 6-10 carbon atoms such as cyclohexyl group, alkyl group having 1 to 10 carbon atoms substituted with at least one halogen atom such as fluorine atom or chlorine atom, for example, trifluoromethyl group, 2,2,2-trifluoroethyl group or trichloromethyl group, or C₆₋₁₀ aryl group substituted with at least one halogen atom such as fluorine or chlorine, for example, pentafluorophenyl group, and z is an integer of 2 or more.

The addition of the repeating unit represented by the general formula (5) may improve solubility to an organic solvent.
A hydroxy value of the hydroxyl group-containing organic solvent-soluble fluorocarbon resin (B-1) is preferably 5-250, more preferably 10-200, far more preferably 20-150. A hydroxy value less than 5 may extremely reduce an introduced amount of the isocyanate group-containing radically polymerizable monomer (B-2), resulting in that a reaction mixture may become cloudy. The hydroxyl group-containing organic solvent-soluble fluorocarbon resin (B-1) may have an acid value, that is, have a free carboxylic acid group. The free carboxylic acid group may be combined with a curing agent such as the following melamine, isocyanate prepolymer, blocked isocyanate prepolymer and the like to be crosslinked.

The organic solvent-soluble fluorocarbon resin (B-1) may include any compounds prepared by the known process, and also include commercially available ones, for example, vinyl ether fluorocarbon resin such as Lumiflon LF-100, LF-200, LF-302, LF-400, LF-554, LF-600, LF-986N, respectively trade names marketed by Asahi Glass Co., Ltd., allyl ether fluorocarbon resin such as Cefral Coat PX-40, A606X, A202B, CF-803 respectively trade names marketed by Central Glass Co., Ltd., vinyl carboxylate/acrylate fluorocarbon resin such as Zafron FC-110, FC-220, FC-250, FC-275, FC-310, FC-575, XFC973 respectively trade names marketed by Toagosei Co., Ltd., vinyl ether/vinyl carboxylate fluorocarbon resin such as Fluonate, trade name marketed by Dainippon Ink And Chemicals, Incorporated, and the like. The hydroxyl group-containing organic solvent-soluble fluorocarbon resin (B-1) may be used alone or in combinations.

The isocyanate group-containing radically polymerizable monomer (B-2) may include, without particular limitations, ones containing isocyanate group and a radically polymerizable moiety, preferably a radically polymerizable monomer containing isocyanate group and free of other functional group such as hydroxyl group or polysiloxane chain. The preferable isocyanate group-containing radically polymerizable monomer (B-2) may include, for example, a radically polymerizable monomer represented by the following general formula (6):

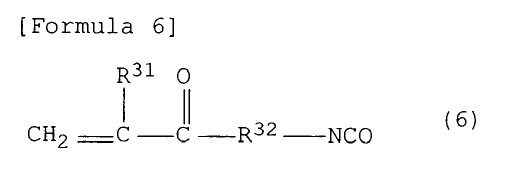

where R³¹ is hydrogen atom, hydrocarbon group having 1 to 10 carbon atoms, for example, alkyl group having 1 to 10 carbon atoms such as methyl group, ethyl group, propyl group, butyl group, pentyl group, and hexyl group, aryl group having 6 to 10 carbon atoms such as phenyl group, cycloalkyl group having 3 to 10 carbon atoms such as cyclohexyl group, and R³² is oxygen atom, straight chain or branched chain bivalent hydrocarbon group having 1 to 10 carbon atoms, for example, alkylene group having 1 to 10 carbon atoms such as methylene group, ethylene group, trimethylene group, and tetramethylene group, alkylidene group having 2 to 10 carbon atoms such as isopropylidene group, arylene group having 6 to 10 carbon atoms such as phenylene, tolylene, xylylene, and cycloalkylene group having 3 to 10 carbon atoms such as cyclohexylene group; and also include a radically polymerizable monomer represented by the general formula (7):

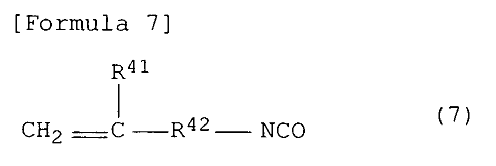

where R⁴¹ is hydrogen atom, hydrocarbon group having 1 to 10 carbon atoms, for example, alkyl group having 1 to 10 carbon atoms such as methyl group, ethyl group, propyl group, butyl group, pentyl group, and hexyl group, aryl group having 6 to 10 carbon atoms such as phenyl group, cycloalkyl group having 3 to 10 carbon atoms such as cyclohexyl group, and R⁴² is oxygen atom, straight chain or branched chain bivalent hydrocarbon group having 1 to 10 carbon atoms, for example, alkylene group having 1 to 10 carbon atoms such as methylene group, ethylene group, trimethylene group, and tetramethylene group, alkylidene group having 2 to 10 carbon atoms such as isopropylidene group, arylene group having 6 to 10 carbon atoms such as phenylene, tolylene, xylylene, and cycloalkylene group having 3 to 10 carbon atoms such as cyclohexylene group.

The isocyanate group-containing radically polymerizable monomer (B-2) may preferably include at least one selected from methacryloyl isocyanate, 2-isocyanatoethyl methacrylate, m- or p-isopropenyl-α,α-dimethylbenzyl isocyanate.
The reaction of the hydroxyl group-containing organic solvent-soluble fluorocarbon resin (B-1) with the isocyanate group-containing radically polymerizable monomer (B-2) may be carried out under such conditions that the isocyanate group-containing radically polymerizable monomer (B-1) is used in an amount of preferably 0.001 mole or more, but less than 0.1 mole, more preferably 0.01 mole or more, but less than 0.08 mole per one equivalent of hydroxyl group in the hydroxyl group-containing organic solvent-soluble fluorocarbon resin (B-1). The isocyanate group-containing radically polymerizable monomer (B-2) less than 0.001 mole may make graft copolymerization difficult, resulting in that a reaction mixture may become cloudy and separated to two layers with time. When 0.1 mole or more, gelation may take place on graft copolymerization. The reaction of the hydroxyl group-containing organic solvent-soluble fluorocarbon resin (B-1) with the isocyanate group-containing radically polymerizable monomer (B-2) may be carried out at a temperature of room temperature to 80°C in the presence or absence of a catalyst.

The above copolymer has a number average molecular weight of 4,000 to 200,000, preferably 8,000 to 70,000.
The graft copolymer is preferably a copolymer of 2 to 70% by weight of an organic solvent-soluble fluorocarbon resin having a radically polymerizable unsaturated bond through an urethane linkage, 4 to 40% by weight of the one end radically polymerizable polysiloxane (d), and 15 to 94% by weight of other radically polymerizable monomer.
(3) The silicone fluorocarbon resin may also include a graft copolymer prepared by copolymerizing the organic solvent-soluble fluorocarbon resin (i) having the radically polymerizable unsaturated bond moiety through the urethane linkage as above mentioned, the one end radically polymerizable polysiloxane (d) as above mentioned, the one end radically polymerizable alkoxypolyalkylene glycol (j), and a radically polymerizable monomer (e) other than components (i), (d) and (j) as above mentioned, and specifically include graft copolymers disclosed in Japanese Patent Application Laid-Open No. 119355/00.

The one end radically polymerizable alkoxypolyalkylene glycol (j) may include a one end radically polymerizable alkoxypolyalkylene glycol represented by the general formula (8):

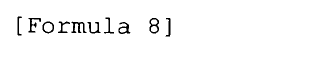

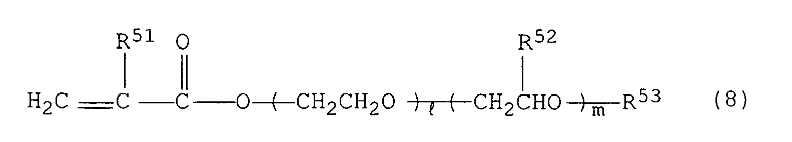

where R⁵¹ is hydrogen atom or hydrocarbon group having 1 to 10 carbon atoms, R⁵² is hydrocarbon group having 1 to 10 carbon atoms, R⁵³ is straight chain or branched chain hydrocarbon group substituted or not substituted with halogen atom, ℓ is an integer of 1 or more, m is an arbitrary integer.

In the general formula (8), R⁵¹ is hydrocarbon group having 1 to 10 carbon atoms, preferably hydrogen atom or methyl group, R⁵² in the general formula (8) is preferably methyl group, R⁵³ in the general formula (8) is preferably alkyl group such as methyl group, ethyl group, propyl group, and butyl group, phenyl group, or alkyl-substituted phenyl group, ℓ in the general formula (8) is an integer of 1 or more, preferably 2 to 100, m in the general formula (8) is an arbitrary integer, preferably 0 to 10, more preferably 0 (zero).

The one end radically polymerizable alkoxypolyalkylene glycol (j) may include ones prepared by a known method, and may include commercially available ones, for example, Blemmer PME-100, PME-200, PME-400, PME-4000, 50POEP-800B (respectively trade names marketed by NOF Corporation), Light-Ester MC, MTG, 130MA, 041MA (respectively trade names, marketed by Kyoeisha Chemical Co., Ltd.), Light-Acrylate BO-A, EC-A, MTG-A, 130A (respectively trade names marketed by Kyoeisha Chemical Co., Ltd.), and the like.

The above copolymer has a number average molecular weight of 4,000 to 200,000, preferably 8,000 to 70,000.
The above graft copolymer is preferably a copolymer of 2 to 66% by weight of the organic solvent-soluble fluorocarbon resin having the radically polymerizable unsaturated bond moiety through the urethane linkage, 4 to 40% by weight of the one end radically polymerizable polysiloxane, 1 to 25% by weight of the one end radically polymerizable alkoxypolyalkylene glycol, and 28 to 92% by weight of other radically polymerizable monomer.

(4) The silicone fluorocarbon resin may also include a graft copolymer prepared by copolymerizing the organic solvent-soluble fluorocarbon resin (i) having the radically polymerizable unsaturated bond moiety through the urethane linkage as above mentioned, the one end radically polymerizable polysiloxane (d) as above mentioned, the radically polymerizable monomer (f) having one radically polymerizable double bond and at least one fluoroalkyl group in the molecule as above mentioned, and the radically polymerizable monomer (e) other than components (i), (d) and (f), and specifically may include the graft copolymer disclosed in Japanese Patent Application Laid-Open No. 151831/01.

The above copolymer has a number average molecular weight of 4,000 to 200,000, preferably 8,000 to 70,000.
The graft copolymer is preferably a copolymer of 2 to 66% by weight of the organic solvent-soluble fluorocarbon resin having the radically polymerizable unsaturated bond moiety through the urethane linkage, 4 to 40% by weight of the one end radically polymerizable polysiloxane, 1 to 50% by weight of the radically polymerizable monomer having one radically polymerizable double bond and at least one fluoroalkyl group in the molecule, and 4 to 93% by weight of other radically polymerizable monomer.

Addition of the resin-coated powder material of the first invention to a coating composition and a molding material makes it possible to impart water repellency, stain resistance, fog resistance, anti-icing properties onto the surface of a coating film and a molded product. The coating composition and the molding material may include ones known in the art.
Specific examples of the coating composition may include the following ones.
The coating composition may include a 100% liquid coating composition per se, organic solvent based coating composition, water based coating composition, powder coating composition, water-dispersed powder coating composition or a powder slurry, etc.

The resin to be added to the coating composition may include a non-curable resin and curable resin. The resin may include an organic resin, inorganic resin and a combined resin thereof.
The inorganic resin may include any known resins, such as an alkali-type silicate resin, alkylsilicate resin, etc.

The above resins may contain, as a curing agent or curing catalyst, an acid catalyst, basic catalyst and salt as known in the art.
The non-crosslinkable organic resin may include any known resins, for example, silicone resin, fluorocarbon resin, acrylic resin, polyester resin, alkyd resin, epoxy resin, phenol resin, polyurethane resin, amino resin, cellulose resin, polyvinyl chloride resin, vinyl acetate resin, polyethylene resin, and a mixed resin thereof or a chemically-combined modified resin thereof.

The curable organic resin may include any known curable resins, for example, an amino-curing resin, isocyanate-curing resin, acid•epoxy-curing resin, hydrolyzable silane-curing resin, hydroxyl group•epoxy group-curing resin, hydrazine-curing resin, oxidative polymerization-curing resin, photo (or heat) radical polymerization type resin, photo (or heat) cationic polymerization type resin, and combined resins thereof. The above curable resins may optionally contain any known additives for curing, for example, a curing agent, curing catalyst, curing promotor, etc.

The above coating composition may optionally contain any additives known in the field of the coating composition, for example, color pigment, extender pigment, metallic pigment, colored pearl pigment, flowability controlling agent, anti-cissing agent, anti-sagging agent, ultraviolet light absorber, antioxidant, ultraviolet light stabilizer, flatting agent, lustering agent, preservative, curing promotor, curing catalyst, scuff proof agent, anti-foaming agent, solvent, etc.

The non-crosslinkable resin used in the molded product may include any known resins, for example, silicone resin, ABS resin, nylon, fluorocarbon resin, acrylic resin, polyester resin, epoxy resin, phenol resin, polyurethane resin, amino resin, cellulose resin, polyvinyl chloride resin, vinyl acetate resin, polyethylene resin, reinforced cellulose resin, a physically mixed resin thereof or a chemically-combined modified resin thereof.

The curable resin of the above organic resin may include any known curable resins, for example, amino-curing resin, isocyanate-curing resin, acid•epoxy curing resin, hydroxyl group•epoxy group-curing resin, radical polymerization type resin, cationic polymerization type resin, and combined resins thereof. The above curable resin may optionally contain any known additives for curing, for example, a curing agent, curing catalyst, curing promotor, etc.

A mixing amount of the resin-coated powder material of the first invention may arbitrarily be determined depending on kinds, characteristics, etc. of the coating composition or molding material, and is usually 1 to 200 parts by weight, preferably 2 to 100 parts by weight per 100 parts by weight of a solid content of the coating composition or molding material. A mixing amount less than 1 (one) part by weight may not be effective on water repellency. On the other hand, a mixing amount more than 200 parts by weight may reduce fabrication properties and water repellency.

In the first invention, the resin to be coated onto the needle-like single-crystal inorganic powder may preferably have a lower polarity compared with that of a resin used in the coating composition. The use of the resin having a lower polarity makes it possible to form a coating film rich in the resin-coated powder material around the surface of the coating film, resulting in showing improved water repellency in a smaller amount of the resin-coated powder material. For the purpose of making the polarity of the resin to be coated lower compared with that of the resin used in the coating composition, a desirable combination of both resins may preferably be determined by a preliminary experiment to demonstrate the required polarity of the resin, because a kind of the resin, curing agent and a mixing ratio thereof in the coating composition may have important influences on the polarity of the resin, but a kind and mixing amount of a solvent, other additives, pigments etc., may also have influences on the polarity of the resin.

For example, a coating composition using epoxy resin, acrylic resin, polyester resin or the like may preferably be combined with a needle-like single-crystal inorganic powder coated with a silicone resin, fluorocarbon resin, or a combined resin thereof.
A water repellent coating film formed by use of a coating composition containing the resin-coated powder material of the first invention may preferably has a contact angle to water of 110° or more, particularly 140° or more.
The second invention is explained hereinafter.

The needle-like single-crystal inorganic powder used in the second invention may include the same one as that used in the resin-coated powder material of the first invention.
In the coating composition of the second invention, a base coating composition to be mixed with the needle-like single-crystal inorganic powder (hereinafter may simply be referred to as a base coating composition) may include silicone resin coating composition, fluorocarbon resin coating composition, and a combined coating composition thereof.

The base coating composition may include a base coating composition containing, as a resin component, a 100% liquid resin per se, a diluted solid resin prepared by dissolving or dispersing a solid resin per se into a liquid solvent, a diluted liquid resin prepared by dissolving or dispersing a liquid resin per se into a liquid solvent, etc.
The resin used in the base coating composition may include a non-curable resin and a curable resin.

The silicone resin may include a known inorganic silicone resin, for example, an alkali-type silicate resin, alkyl silicate resin, etc. The above resin may contain, as a curing agent or curing catalyst, an acid catalyst, basic catalyst and salt.
In addition to the above inorganic silicone resin, an organic silicone resin may be used.

The organic silicone resin and fluorocarbon resin used in the base coating composition may preferably include the same ones as the silicone resin and fluorocarbon resin preferably used as the resin to be coated onto the needle-like single-crystal inorganic powder in the first invention.
The organic solvent used in the base coating composition may include the organic solvent used in the organic solvent based coating composition in the art, and specifically include ones exemplified as the solvent used in the method of coating the resin onto the powder material in the first invention.

The base coating composition may optionally contain a colorant having white color, blue color, green color, black color, yellow color, violet color, red color or a mixed color thereof, metallic pigment, colored pearl pigment, flowability controlling agent, anti-cissing agent, anti-sagging agent, ultraviolet light absorber, antioxidant, ultraviolet light stabilizer, flatting agent, preservative, scuff proof agent, anti-foaming agent, mildew proofing agent, anti-sagging agent, fillers, organic fine particles, other additives, etc.

The base coating composition may contain known water repellent pigments such as polytetrafluoroethylene powder, silicone resin powder, fluorinated graft resin powder, hydrophobic cubic silica, fluorocarbon powder, carbon black powder and the like in combination with the needle-like single-crystal inorganic powder.
In the case where the resin used in the base coating composition is a resin having a functional group capable of forming a crosslinked coating film, for example, hydroxyl group, carboxyl group, hydrolyzable silyl group etc., a curing agent may optionally be used. The curing agent may include, for example, blocked or non-blocked polyisocyanate, amino resin, acid anhydride, carboxylic acid, etc., when the functional group is hydroxyl group, and may include polyepoxide etc., when the functional group is carboxyl group.

### Blocked or non-blocked polyisocyanate:

A polyisocyanate compound may include a free isocyanate compound and a blocked isocyanate compound. A polyisocyanate compound having a free isocyanate group may include an organic diisocyanate per se, for example, aliphatic diisocyanates such as hexamethylene diisocyanate, trimethylhexamethylene diisocyanate and the like, alicyclic diisocyanates such as xylene diisocyanate, isophorone diisocyanate and the like, aromatic diisocyanates such as torylene diisocyanate, polylene diisocyanate, 4,4'-diphenylmethane diisocyanate and the like, and the like, an adduct of an excess amount of respective organic diisocyanates with polyhydric alcohol, low molecular weight polyester resin, water, etc., a polymer between respective organic diisocyanates, isocyanate•biuret product, etc. Typical trade names thereof may include, for example, Burnock D-750, -800, DN-950, -970, 15-455 (respectively trade names, marketed by Dainippon Ink And Chemicals, Incorporated), Desmodur L, N, HI, N3390 (respectively trade names, marketed by Bayer Ltd.), Takenate D-102, -202, -110, -123N (respectively trade names, marketed by Takeda Pharmaceutical Company Limited), Coronate EH, L, HL, 203 (respectively trade names, marketed by Nippon Polyurethane Industry Co., Ltd.), Duranate 24A-90CX (trade name, marketed by Asahi Kasei Corporation), and the like. The polyisocyanate compound having a blocked isocyanate group may include ones obtained by blocking the polyisocyanate compound having the free isocyanate group with a known blocking agent such as oxime, phenol, alcohol, lactam, malonate, mercaptan and the like. Typical examples of trade names thereof may include, for example, Burnock D-550 (trade name, marketed by Dainippon Ink And Chemicals, Incorporated), Takenate B-815-N (trade name, marketed by Takeda Pharmaceutical Company Limited), Additol VXL-80 (trade name, marketed by Hoechst AG Germany), Coronate 2507 (trade name, marketed by Nippon Polyurethane Industry Co., Ltd.), and the like.

A mixing amount of the blocked or non-blocked polyisocyanate compound curing agent may be in such an amount that a coating film may be cured so as to show satisfactory performances, and preferably that a weight ratio of the hydroxyl group-containing resin/the curing agent is in the range of 90/10 to 50/50.
The amino resin may include, for example, ones prepared by condensation or co-condensation of melamine, benzoguanamine, urea, dicyandiamide, etc., with formaldehyde, further include ones obtained by modifying the above amino resin with alcohols having 1 to 8 carbon atoms, carboxyl group-containing amino resin, and the like. The above amino resin may be prepared by reacting about 0.5 to about 2 equivalents of formaldehyde per 1 (one) equivalent of amino group under basic or acidic state by use of a pH controlling agent such as ammonia, sodium hydroxide, and amines according to a known process per se.

A mixing amount of the amino resin curing agent may be in such an amount that a coating film may be cured so as to show satisfactory performances, and preferably that a weight ratio of the hydroxyl group-containing resin/the curing agent is in the range of 80/20 to 50/50.
The above acid anhydride may include, for example, maleic anhydride, phthalic anhydride, trimellitic anhydride, pyromellitic anhydride, dodecane diacid anhydride, adipic anhydride, sebacic anhydride, and polyanhydride of at least one thereof.

A mixing amount of the acid anhydride curing agent may be in such an amount that a coating film may be cured so as to show satisfactory performances, and preferably that a weight ratio of the hydroxyl group-containing resin/the curing agent is in the range of 90/10 to 50/50.
The polycarboxylic acid may include, for example, polycarboxylic acid resin such as acrylic resin, polyester resin, and the like, polycarboxylic acid compound such as adipic acid, sebacic acid, phthalic acid, and the like.

A mixing amount of the polycarboxylic acid curing agent may be in such an amount that a coating film may be cured so as to show satisfactory performances, and preferably that a weight ratio of the hydroxyl group-containing resin/polycarboxylic acid curing agent is in the range of 80/20 to 50/50.
The polyepoxide ones prepared by modifying a radical homopolymer of an epoxy group-containing radically polymerizable monomer such as 3,4-epoxycyclohexylmethyl (meth)acrylate, glycidyl (meth)acrylate, etc., a copolymer of the above monomer with other radically polymerizable monomer such as C₁₋₂₄ alkyl or cycloalkyl ester of (meth)acrylic acid, styrene, etc., Epolead GT300 (trade name, marketed by Daicel Chemical Industries Ltd., trifunctional alicyclic epoxy resin), Epolead GT400 (trade name, marketed by Daicel Chemical Industries Ltd., tetrafunctional alicyclic epoxy resin), EHPE (trade name, marketed by Daicel Chemical Industries Ltd., trifunctional alicyclic epoxy resin), bisphenol type epoxy resin, novolac type epoxy resin, ε-caprolactam-modified bisphenol type epoxy resin, polyvinyl-cyclohexane diepoxide, etc., with a polycarboxylic acid.

A mixing amount of the polyepoxide curing agent may be in such an amount that a coating film may be cured so as to show satisfactory performances, and preferably that a weight ratio of the hydroxyl group-containing resin/the curing agent is in the range of 90/10 to 50/50.
In the case where the resin used in the coating composition has a hydrolyzable silane group, for example, methoxysilane and ethoxysilane may be hydrolyzed by moisture in air, for example, to form a silanol, resulting in that condensation therebetween may take to form a siloxane linkage, and that a resulting coating film can be cured.
The above silane compound may include, for example, dialkoxysilanes such as dimethoxydimethylsilane, dimethoxydiethylsilane, and the like; trialkoxysilanes such as trimethoxymethylsilane, trimethoxyethylsilane, and the like; tetraalkoxysilanes such as tetramethoxysilane, tetraethoxysilane and the like; vinylsilanes such as vinyltriethoxysilane, vinyltrimethoxylsilane, vinyltris (methoxyethoxy)silane, γ-methacryloyloxypropyl trimethoxysilane, 2-styrylethyltrimethoxysilane, and the like; epoxysilanes such as β-(3,4-epoxycyclohexyl)ethyl trimethoxysilane, γ-glycidoxypropyl trimethoxysilane, γ-glycidoxypropylmethyl diethoxysilane, and the like; other silanes such as γ-mercaptopropyltrimethoxysilane, γ-mercaptopropylmethyldimethoxysilane, γ-chloropropyltrimethoxysilane, γ-chloropropylmethyldimethoxysilane, methyltrichlorosilane, dimethyldichlorosilane, trimethylchlorosilane, and the like; condensation products of these silane compounds, radical (co)polymers of vinyl silanes, etc.

A mixing amount of the silane compound curing agent may be in such an amount that a coating film may be cured so as to show satisfactory performances, and preferably that a weight ratio of the hydroxyl group-containing resin/the curing agent is in the range of 90/10 to 50/50.
The above curable resin may optionally contain known additives for curing, for example, cissing catalysts such as acid catalyst, basic catalyst, salt, metal compound, metal salt, etc., as known in respective curing types.

In the coating composition of the second invention, a mixing amount of the needle-like single-crystal inorganic powder may arbitrarily be selected depending on kinds and required performances of the coating composition, and is usually 1 to 200 parts by weight, preferably 2 to 100 parts by weight per 100 parts by weight of the solid content of the coating composition. A mixing amount less than 1 (one) part by weight may not be effective on water repellency. On the other hand, a mixing amount more than 200 parts by weight may reduce fabrication properties and water repellency.

The water-repellent coating film-forming method of the second invention comprises coating a coating composition prepared by mixing a needle-like single-crystal inorganic powder, preferably in a three-dimensional shape having three or more needle-like crystal portions stretched in different directions from a core portion, more preferably in a tetrapod shape, as a topcoat coating composition onto a substrate to form a water-repellent coating film.
The above substrate may include any substrates used in coating in the art, without particular limitations, for example, metals such as iron, zinc, tin, stainless steel, aluminum and the like, plated materials, inorganic materials such as glass, concrete, mortar, slate, roofing tile, gypsum, and the like, celluloses, papers, plastics, and the like. In addition to the above substrates, the substrate of the second invention may also include ones prepared by subjecting the above substrates to surface treatment, primer coating, intercoat coating, etc., as known suitable in the art respectively. That is, the coating composition of the second invention is used as a topcoat coating composition onto the above substrates.

The above substrates may include ones having a pattern such as plate, convex, concave, fiber, stripe and the like, and may be in the shape of a box, pipe, rectangle, etc.
The above substrates may be applicable to, for example, automobile, aviation, marine structure, train, building material such as roof, wall, bridge and the like, electric wire, utility pole, roads such as guardrail, traffic-control sign, display panel, signal, around tunnel, and the like, and bathroom.

In the second invention, a coating film thickness may be varied, but usually 5 to 500 µm, preferably 10 to 250 µm. A coating method may include, spray coating, brushing, troweling, roll coating, flow coating, dip coating, knife coating, gravure coating, screen printing, reverse roll coating, etc. Drying may be performed at room temperature, or by heating at 40 to 270°C for 10 seconds to 60 minutes.

The water-repellent coating film formed from the coating composition of the second invention has a contact angle to water of 110° or more, particularly 140° or more.
The water-repellent coating product of the second invention has a topcoat water-repellent coating film formed by the water-repellent coating film-forming method which comprises coating the water-repellent coating composition prepared by mixing the silicone resin coating composition and/or fluorocarbon resin coating composition with the needle-like single-crystal inorganic powder in the three dimensional shape, preferably the tetrapod shape as the topcoat coating composition onto the above substrate.

The third invention is explained hereinafter.
The inorganic powder dispersion used in the substrate-surface-modifying method contains, as essential components, the needle-like single-crystal inorganic powder and a resin (hereinafter referred to as an inorganic powder-dispersing resin), and optionally a solvent such as water and an organic solvent.
The above components are explained hereinafter.

The needle-like single-crystal inorganic powder used in the substrate surface-modifying method of the third invention may include the same ones as used in the resin-coated powder material of the first invention.
The inorganic powder-dispersing resin in the third invention may include the silicone resin coating composition, fluorocarbon resin coating composition and combined resins thereof.
The inorganic powder-dispersing resin may include as a resin component, a 100% liquid resin per se, a diluted solid resin prepared by dissolving or dispersing a solid resin per se into a liquid solvent, a diluted liquid resin prepared by dissolving or dispersing a liquid resin per se into a liquid solvent, etc.

The inorganic powder-dispersing resin may include a non-curable resin and curable resin.
The silicone resin may include a known inorganic silicone resin, for example, alkali-type silicate resin, alkyl silicate resin, etc.
The inorganic powder-dispersing resin may contain an acid catalyst, basic catalyst, and salt as a curing agent or as a curing catalyst as known in the art.

In addition to the inorganic silicone resin, an organic silicone resin may be used.
The organic silicone resin and fluorocarbon resin may include the same ones as the silicone resin and fluorocarbon resin used as the resin to be coated onto the needle-like single-crystal inorganic powder in the first invention.
The organic solvent used in the coating composition in the third invention may include any organic solvent used in the organic solvent based coating composition as known in the art, and specifically may include ones exemplified as the solvent used in the method of coating the resin onto the powder material in the first invention.

The dispersion of the third invention may optionally contain the additives mixed with the base coating composition in the second invention.
The dispersion of the third invention may contain a known water-repellent pigment in combination with the needle-like single-crystal inorganic powder as in the base coating composition of the second invention.
The inorganic powder-dispersing resin of the third invention is as in the resin used in the base coating composition of the second invention.

In the dispersion of the third invention, a mixing amount of the needle-like single-crystal inorganic powder may arbitrarily be selected depending on kinds and required performances of the resin in the dispersion, and is usually 1 to 200 parts by weight, preferably 2 to 100 parts by weight per 100 parts by weight of the solid content of the dispersion. A mixing amount less than 1 (one) part by weight may not be effective on water-repellency. On the other hand, a mixing amount more than 200 parts by weight may reduce fabrication properties and water-repellency.

A coating film thickness from the dispersion or the coating composition in the third invention is as in the coating film thickness in the second invention.
The substrate to be coated with the inorganic powder dispersion in the substrate-surface modifying method of the third invention may include a plastics substrate and an inorganic substrate having water-repellency as known in the art. The above substrate may also include a new substrate and an old substrate which was used outdoors for a long period of time. In the case where the inorganic powder dispersion is coated onto the surface of the old substrate, as the case may be, optionally the rust developed on the old substrate is removed, or optionally a coating film having coating film defects such as peeling and crack on the old substrate may be subjected to abrasion for removing, followed by coating the inorganic powder dispersion.

The substrate may include, for example, metals such as iron, zinc, tin, stainless steel, aluminum and the like, plated materials, inorganic materials such as glass, concrete, mortar, slate, roofing tile, gypsum, and the like, celluloses, papers, plastics, and the like. In addition to the above substrates, the substrate of the third invention may also include ones prepared by subjecting the above-substrates to surface treatment, primer coating, intercoat coating, etc., as known suitable in the art respectively. That is, the coating composition of the third invention is used as a topcoat coating composition onto the above substrates.

The above substrates may include ones having a pattern such as plate, convex, concave, fiber, stripe and the like, and may be in the shape of a box, pipe, rectangle, etc.
The above substrates may be applicable to, for example, automobile, aviation, marine structure, train, building material such as roof, wall, bridge and the like, electric wire, utility pole, roads such as guardrail, traffic-control sign, display panel, signal, aroud tunnel, and the like, and bathroom.

In the substrate surface-modifying method of the third invention, the substrate, on which the resin dispersion of the needle-like single-crystal inorganic powder is coated, may include inorganic substrates and plastics as known in the art, particularly a substrate formed from a coating composition containing, as a resin component, an inorganic resin or an organic resin, and a substrate prepared by plastics processing.
The inorganic resin coating composition may include a coating composition containing, as a resin component, alkali type silicate resin, alkyl silicate resin, etc., as known in the art.

The inorganic resin coating composition may contain an acid catalyst, basic catalyst, and salt.
The plastics processing including fabricated product may be such that, for example, pellets of a non-curable resin or a curable resin are subjected to fabrication by use of a fabrication machine.
The non-curable resin used may include any known resins, for example, silicone resin, ABS resin, nylon, fluorocarbon resin, acrylic resin, polyester resin, epoxy resin, phenol resin, polyurethane resin, amino resin, cellulose resin, polyvinyl chloride resin, vinyl acetate resin, polyethylene resin, reinforced cellulose resin, a physically mixed resin thereof or a chemically-combined modified resin thereof.

The curable resin may include any known curable resins, for example, an amino-curing resin, isocyanate-curing resin, acid•epoxy-curing resin, hydrolyzable silane-curing resin, hydroxyl group•epoxy group-curing resin, hydrazine-curing resin, oxidative polymerization-curing resin, photo (or heat) radical polymerization type resin, photo (or heat) cationic polymerization type resin, and combined resins thereof. The above curable resins may optionally contain any known additives for curing, for example, a curing agent, curing catalyst, curing promotor, etc.

The plastics substrate may optionally contain any additives known in the field of the plastics fabrication, for example, color pigment, extender pigment, metallic pigment, colored pearl pigment, flowability controlling agent, anti-cissing agent, anti-sagging agent, ultraviolet light absorber, antioxidant, ultraviolet light stabilizer, flatting agent, lustering agent, preservatives, curing promotor, curing catalyst, a cuff proof agent, defoaming agent, anti-foaming agent, etc.

The coating composition containing, as the resin component, the organic resin may include, for example, the following.
The coating composition may include a 100% liquid coating composition per se, organic solvent based coating composition, water based coating composition, powder coating composition, water-dispersed powder coating composition or a powder slurry, etc.
The substrate surface-modifying method of the third invention preferably comprises coating a curable coating composition or a curable inorganic coating composition onto the substrate prior to being coated with the inorganic powder dispersion to form an uncured coating film, followed by coating the inorganic powder dispersion, and curing the uncured coating film. In the case where the resin used in the inorganic powder dispersion is a curable resin, the curable resin and the uncured coating film may be cured simultaneously.

The method of coating the inorganic powder dispersion onto the uncured substrate, followed by curing the uncured substrate, is preferable in that coating film performances such as adhesion properties between the substrate and the coating film formed from the inorganic powder dispersion, finish properties, water-repellency, etc., may be improved.
In the substrate surface-modifying method of the third invention, the resin to be coated onto the needle-like single-crystal inorganic powder may preferably have a lower polarity compared with that of a resin used in the coating composition. The use of the resin having a lower polarity makes it possible to form a coating film rich in the resin-coated needle-like single-crystal inorganic powder around the surface of the coating film, resulting in showing improved water repellency in a smaller amount of the resin-coated powder material. For the purpose of making the polarity of the resin to be coated lower compared with that of the resin used in the coating composition, a desirable combination of both resins may preferably be determined by a preliminary experiment to demonstrate the required polarity of the resin, because a kind of the resin, curing agent and a mixing ratio thereof in the coating composition may have important influences on the polarity of the resin, but a kind and mixing amount of a solvent, other additives, pigments etc., may also have influences on the polarity of the resin.

For example, a coating composition using epoxy resin, acrylic resin, polyester resin or the like may preferably be combined with a needle-like single-crystal inorganic powder coated with a silicone resin, fluorocarbon resin, or a combined resin thereof.
A water repellent coating film formed by use of the coating composition of the third invention may preferably has a contact angle to water of 110° or more, particularly 140° or more.

The water-repellent coating product of the third invention has a topcoat water-repellent coating film formed by coating a water-repellent coating composition prepared by mixing a needle-like single-crystal inorganic powder, preferably in a three-dimensional shape, more preferably in a tetrapod shape, as a topcoat coating composition onto a substrate.

### Example

The present invention is explained by the following Examples, in which "part" means "part by weight". The present invention should not be limited the Examples.

### Preparation Example of Silicon-Containing Copolymer 1

A mixture of 20 g of butyl acrylate, 370 g of methyl methacrylate, 10 g of γ-methacryloyloxypropyl trimethoxysilane, 5 g of bisazoisobutylonitrile and 400 g of butyl acetate was reacted at 100 to 110°C for 6 hours to obtain the silicon-containing copolymer 1.

### Preparation Example of Silicon-Containing Graft Copolymer 2

### Synthesis of radically polymerizable acrylic copolymer (A):

A reactor was charged with 119 g of xylene, 60 g of n-butyl acetate, 90 g of methyl methacrylate, 10 g of n-butyl methacrylate, 16 g of 2-hydroxyethyl methacrylate and 2 g of Perbutyl O (trade name), followed by heating up to 90°C under dry nitrogen atmosphere, keeping at 90°C for 7 hours, charging 0.8 g of 2-isocyanatoethyl methacrylate at that temperature, heating at 70°C, reacting at 70°C for one hour, confirming that absorption of isocyanate has disappeared by an infrared absorption spectrum of a sample, taking out a reaction mixture to obtain a curable group-containing acrylic (co)polymer (A) having a radically polymerizable unsaturated bond through an urethane linkage.

A reactor was charged with 25.0 g of the radically polymerizable acrylic resin (A) obtained as above, 20.4 g of xylene, 10.2 g of n-butyl acetate, 15.7 g of methyl methacrylate, 2.9 g of 2-hydroxyethyl methacrylate, 1.5 g of FM-0721, and 0.3 g of Perbutyl O (trade name), followed by heating up to 90°C under nitrogen atmosphere, keeping at 90°C for 2 hours, adding 0.2 g of Perbutyl O (trade name), and keeping at 90°C for 5 hours to obtain a silicon-containing graft copolymer 2, having a non-volatile matter of 40% and a number average molecular weight of 100,000.

### Preparation Example of Fluoroalkyl Group-Containing Copolymer 1

A mixture of 20 g of 2-perfluorooctylethyl methacrylate, 315 g of methyl methacrylate, 65 g of styrene, 40 g of hexafluoro-m-xylene, 40 g of n-butyl alcohol, and 7.5 g of azobisisobutylvaleronitrile was reacted at 110°C for 7 hours.

### Preparation Example of Silicone·Fluorocarbon Copolymer 1

A mixture of 20 g of 2-perfluorooctylethyl methacrylate, 100 g of γ-methacryloyloxypropyl trimethoxysilane, 315 g of methyl methacrylate, 65 g of styrene, 40 g of hexafluoro-m-xylene, 40 g of n-butyl alcohol and 7.5 g of azobisisobutylvaleronitrile was reacted at 110°C for 7 hours.

### Preparation Example of Silicone·Fluorocarbon Copolymer 2

Trade names of respective materials used in the Preparation Example are as follows. (1) hydroxyl group-containing organic solvent-soluble fluorocarbon resin (A-1): Cefral Coat CF-803 (hydroxy value 60, number average molecular weight 15,000, trade name, marketed by Central Glass Co., Ltd.), Lumiflon LF-600 (hydroxy value 60, number average molecular weight 15,000, trade name, marketed by Asahi Glass Co., Ltd.), Zafron FC-275 (hydroxy value 60, trade name, marketed by Toagosei Co., Ltd.), (2) one end radically polymerizable polysiloxane (B), Silaplaine FM-0721 (number average molecular weight 5,000, trade name, marketed by Chisso Corporation), X-22-174DX (number average molecular weight 4,600, trade name, marketed by Shinetsu Chemical Co., Ltd.), (3) radical polymerization initiator, Perbutyl 0 (trade name, t-butylperoxy-2-ethyl hexanoate, marketed by NOF Corporation), (4) curing agent, Sumidur N3200 (trade name, hexamethylene diisocyanate biuret type prepolymer, marketed by Sumika Bayel Urethane Co., Ltd.).

### Synthesis of Radically Polymerizable Fluorocarbon Resin (B-1)

A glass reactor equipped with a mechanical stirrer, thermometer, condenser and dry nitrogen gas inlet was charged with 1554 parts of Cefral Coat CF-803 (trade name), 233 parts of xylene, and 6.3 parts of 2-isocyanatoethyl methacrylate, followed by heating up to 80°C under dry nitrogen atmosphere, reacting at 80°C for 2 hours, confirming that absorption of isocyanate has disappeared by an infrared absorption spectrum of a sample, taking out a reaction mixture to obtain a fluorocarbon resin (B-1) having a radically polymerizable unsaturated bond through urethane linkage.

A reactor was charged with 26.1 parts of the radically polymerizable resin (B-1), 19.5 parts of xylene, 16.3 parts of n-butyl acetate, 6 parts of methyl methacrylate, 1.8 parts of 2-hydroxyethyl methacrylate, 5.2 parts of FM-0721 (trade name), and 0.1 part of Perbutyl O (trade name), heating at 90°C under nitrogen under nitrogen atmosphere, keeping at 90°C for 2 hours, adding 0.1 part of Perbutyl O (trade name), keeping at 90°C for 5 hours to obtain a graft copolymer having a non-volatile matter of 35% and a weight average molecular weight of 171,000.

### Preparation Example of Silicone·Fluorocarbon Copolymer 3

### Synthesis of Radically Polymerizable Fluorocarbon Resin (B-2) :

A reactor was charged with 1554 parts of Cefral Coat CF-803 (trade name), 233 parts of xylene, and 6.3 parts of 2-isocyanatoethyl methacrylate, followed by heating at 80°C, reacting at 80°C for 2 hours, confirming that absorption of isocyanate has disappeared, by an infrared absorption spectrum of a sample, taking out a reaction mixture to obtain a radically polymerizable fluorocarbon resin (B-2).

A reactor was charged with 26.7 parts of the radically polymerizable fluorocarbon resin (B-2), 14.2 parts of xylene, 13.7 parts of n-butyl acetate, 9 parts of methyl methacrylate, 1.8 parts of 2-hydroxyethyl methacrylate, 1.3 parts of FM-0721 (trade name), 1.3 parts of PME-400 (trade name), and 0.1 part of Perbutyl O (trade name), followed by heating at 90°C under nitrogen atmosphere, keeping at 90°C for 2 hours, adding 0.1 part of Perbutyl O (trade name), and keeping at 90°C for 5 hours to obtain a graft copolymer having a non-volatile matter of 40% and a weight average molecular weight of 146000.

### Preparation Example of Silicone•Fluorocarbon Copolymer 4

Trade names of respective materials used in the Example are as follows.
(1) hydroxyl group-containing organic solvent-soluble fluorocarbon resin (B-3), Cefral Coat CF-803 (hydroxy value 60, number average molecular weight 15,000, trade name, marketed by Central Glass Co., Ltd.), Lumiflon LF-600 (hydroxy value 60, number average molecular weight 15,000, trade name, marketed by Asahi Glass Co., Ltd.), (2) one end radically polymerizable polysiloxane (B), Silaplaine FM-0721 (number average molecular weight 5,000, trade name, marketed by Chisso Corporation), (3) radically polymerizable monomer (C) having one radically polymerizable double bond and at least one fluoroalkyl group in the molecule, Light-Ester FM-108 (heptadecafluorodecyl methacrylate, trade name, marketed by Kyoeisha Chemical Co., Ltd.), (4) radical polymerization initiator, Perbutyl O (t-butylperoxy-2-ethyl hexanoate, trade name, marketed by NOF Corporation), (5) curable type acrylic resin, Desmophen A160 (trade name, hydroxy value 90, marketed by Sumika Bayel Urethane Co., Ltd.), (6) curing agent, Coronate HX (trade name, isocyanurate type prepolymer of hexamethylene diisocyanate, marketed by Nippon Polyurethane Industry Co., Ltd.).

### Synthesis of Radically Polymerizable Fluorocarbon Resin (B)

A reactor was charged with 1554 parts of Cefral Coat CF-803 (trade name), 233 parts of xylene, and 6.3 parts of 2-isocyanatoethyl methacrylate, followed by heating at 80°C under dry nitrogen atmosphere, reacting at 80°C for 2 hours, confirming that absorption of isocyanate has disappeared by an infrared absorption spectrum of a sample, taking out a reaction mixture to obtain a radically polymerizable fluorocarbon resin (B) having a non-volatile matter of 50%.

A reactor was charged with 36.2 parts of the radically polymerizable fluorocarbon resin (B), 11.6 parts of methyl methacrylate, 4.9 parts of 2-hydroxyethyl methacrylate, 10.5 parts of FM-0721 (trade name), 7.7 parts of FM-108 (trade name), 0.4 part of methacrylic acid, 1.5 parts of xylene, 60.2 parts of n-butyl acetate, and 0.3 part of Perbutyl O (trade name), followed by heating up to 90°C under nitrogen atmosphere, keeping at 90°C for 2 hours, adding 0.1 part of Perbutyl O (trade name), and keeping at 90°C for 5 hours to obtain a graft copolymer solution having a non-volatile matter of 40% and a number average molecular weight of 168000.

### Preparation Example of Resin-Coated Powder Material 1

100 parts as solid content of the silicon-containing copolymer 1 was dissolved in methyl acetate so as to be 1% by weight as solid content, followed by stirring with a disper, and slowly adding 50 g of a needle-like single-crystal inorganic powder, Pana-Tetra (trade name, marketed by Matsushita Electric Industrial Co., Ltd., zinc oxide whisker, tetrapod shape, needle-like short fiber length 2 to 50 µm, needle-like short fiber diameter (mean) 0.2 to 3.0 µm, specific gravity 5.78, as shown in Fig. 1, enlarged three-dimensional schematic view) to obtain an inorganic powder dispersion.

The inorganic powder dispersion as above obtained was heated with agitation, followed by removing the organic solvent under vacuum to obtain a resin-coated powder material 1.

### Preparation Example of Resin-Coated Powder Material 1A

The inorganic powder dispersion of the resin-coated powder material 1 was sprayed into a heated and vacuumed booth by use of an atomizer to remove the organic solvent, resulting in preparing the resin-coated powder material 1A.

### Preparation Examples of Resin-Coated Powder Materials 2-7

Preparation example of the resin-coated powder material 1 was duplicated except that in place of the silicon-containing copolymer 1, silicon-containing graft copolymer 2, fluoroalkyl group-containing copolymer 1, silicone·fluorocarbon copolymer 1, silicone·fluorocarbon copolymer 2, silicone·fluorocarbon copolymer 3, and silicone·fluorocarbon copolymer 4 were used respectively to obtain a resin-coated powder material 2, resin-coated powder material 3, resin-coated powder material 4, resin-coated powder material 5, resin-coated powder material 6, and resin-coated powder material 7 respectively.

In the column; Resin-coated powder material, kind, B represents the needle-like single-crystal inorganic powder not coated with the resin in the resin-coated powder material 1 for comparison.
Respective coating compositions used in Examples and Comparative Examples are as follows.
Coating Composition 1: Retan PG-80 Metallic (trade name, marketed by Kansai Paint Co., Ltd., isocyanate-curing acrylic resin coating composition).
Coating Composition 2: Soflex 1630 Clear (trade name, marketed by Kansai Paint Co., Ltd., melamine-curing acrylic resin based clear coating composition).

### Coating Composition 3:

The coating composition 3 was prepared as follows.
A clean reactor was charged with 242 parts of deionized water, and 2.4 parts of Newcol 707SF (trade name, marketed by Dai-ichi Kogyo Seiyaku Co., Ltd., solid content 30%), followed by purging with nitrogen, keeping at 80°C, adding 0.7 part of ammonium persulfate, immediately thereafter dropping a preemulsion having the following composition over 3 hours.

| | |
|---|---|
| deionized water | 352 parts |
| diacetone acrylamide | 33 parts |
| acrylic acid | 3.3 parts |
| styrene | 134 parts |
| methyl methacrylate | 255 parts |
| 2-ethylhexyl acrylate | 147 parts |
| n-butyl acrylate | 98 parts |
| Newcol 707SF | 64.5 parts |
| ammonium persulfate | 1.3 parts |

Next, 30 minutes after the completion of dropping, a solution prepared by dissolving 0.7 part of ammonium persulfate into 7 parts of deionized water was dropped over 30 minutes, followed by keeping at 80°C for 2 hours to obtain a hydrazine-curing acrylic emulsion having a non-volatile matter of 51%.

Next, ammonia was added to the hydrazine-curing acrylic emulsion solution to control pH at 8-9, followed by adding dihydrazide adipate as a curing agent in an amount of 0.3 equivalent of hydrazide group per one equivalent of carbonyl group.
Coating Composition 4: A clean reactor refluxed with nitrogen gas was charged with 85 parts of toluene, followed by heating at 110°C, dropping a solution prepared by dissolving 2 parts of 2,2'-azobis(2-methylbutylonitrile) polymerization initiator into a mixed solution of 40 parts of 3,4-epoxycyclohexylmethyl acrylate, 20 oarts of methyl methacrylate, and 40 parts of n-butyl methacrylate, over about 3 hours, keeping at 110°C for 2 hours after the completion of dropping, adding 15 parts of toluene to complete the reaction, and cooling to obtain a sticky cationic curable acrylic resin solution.

The above resin solution had a glass transition temperature measured by DSC of 34°C, a number average molecular weight measured by GPC (gel permeation chromatography) of 8000, and 17.6 epoxy groups in one molecule.
To 100 parts of the resulting resin solution was added 0.5 part of Cyracure UVI-6990 (trade name, marketed by Union Carbide Japan K.K., photo-cation•radical polymerization initiator).

Coating Composition 5: Acric #2000 (trade name, marketed by Kansai Paint Co., Ltd., acrylic lacquer coating composition).
Test methods shown in the following Tables are as follows.
Contact angle to water at initial period: a water drop was formed on a coating film by dropping 0.03 ml water drop of deionized water onto the surface of the coating film, followed by measuring a contact angle of the water drop by use of a Contactangle meter DCAA marketed by Kyowa Chemical Industry Co., Ltd.
○: contact angle 140° or more
Δ: contact angle 90° to 130°
×: less than 90°

Contact angle to water after 3 months exposure was measured in the same manner as above.

### Change in coating film appearance:

Coating film appearance after 3 months exposure was compared with that at initial period.
○: no changes
Δ: changes in gloss results poor gloss.
×: serious coating film degradations such as cracks, choking, color change developed.

### Examples 1-11 and Comparative Examples 1-4 by use of Coating Composition 1:

Respective coating compositions of Examples 1-11 and Comparative Examples 1-4 having formulations as parts by weight shown in Table 1 were coated onto a zinc phosphate-treated steel plate so as to be a dry film thickness of 80 µm, followed by heating at 100°C for 30 minutes, and curing to form a coating film respectively. Performances of the resulting coating films are shown in Table 1.

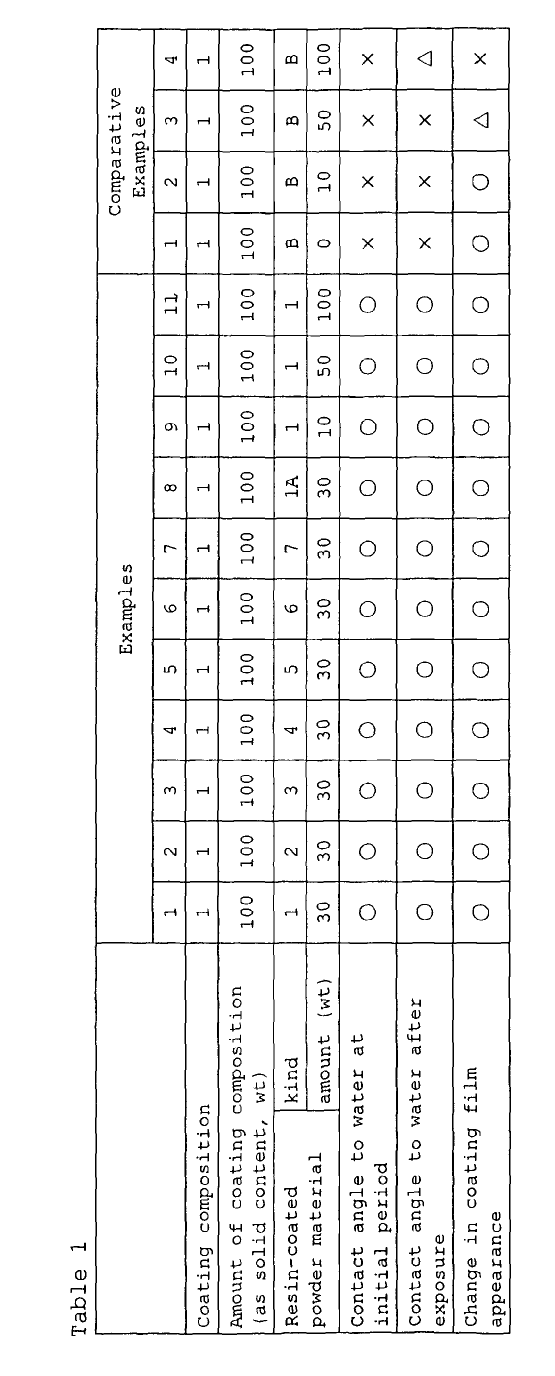

### Examples 12-22 and Comparative Examples 5-8 by use of Coating Composition 2:

Respective coating compositions of Examples 12-22 and Comparative Examples 5-8 having formulations as parts by weight shown in Table 2 were coated onto a zinc phosphate-treated steel plate so as to be a dry film thickness of 80 µm, followed by heating at 140°C for 30 minutes, and curing to form a coating film respectively. Performances of the resulting coating films are shown in Table 2.

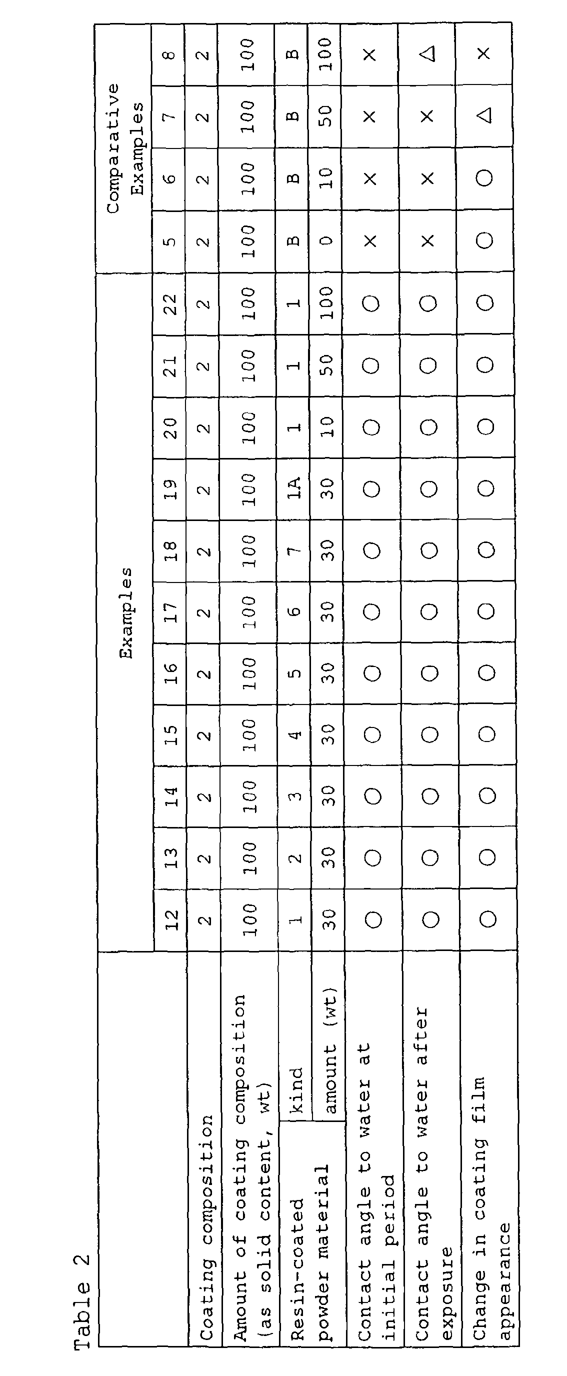

### Examples 23-33 and Comparative Examples 9-12 by use of Coating Composition 3:

Respective coating compositions of Examples 23-33 and Comparative Examples 9-12 having formulations as parts by weight shown in Table 3 were coated onto a zinc phosphate-treated steel plate so as to be a dry film thickness of 80 µm, followed by heating at 100°C for 30 minutes, and curing to form a coating film respectively. Performances of the resulting coating films are shown in Table 3.

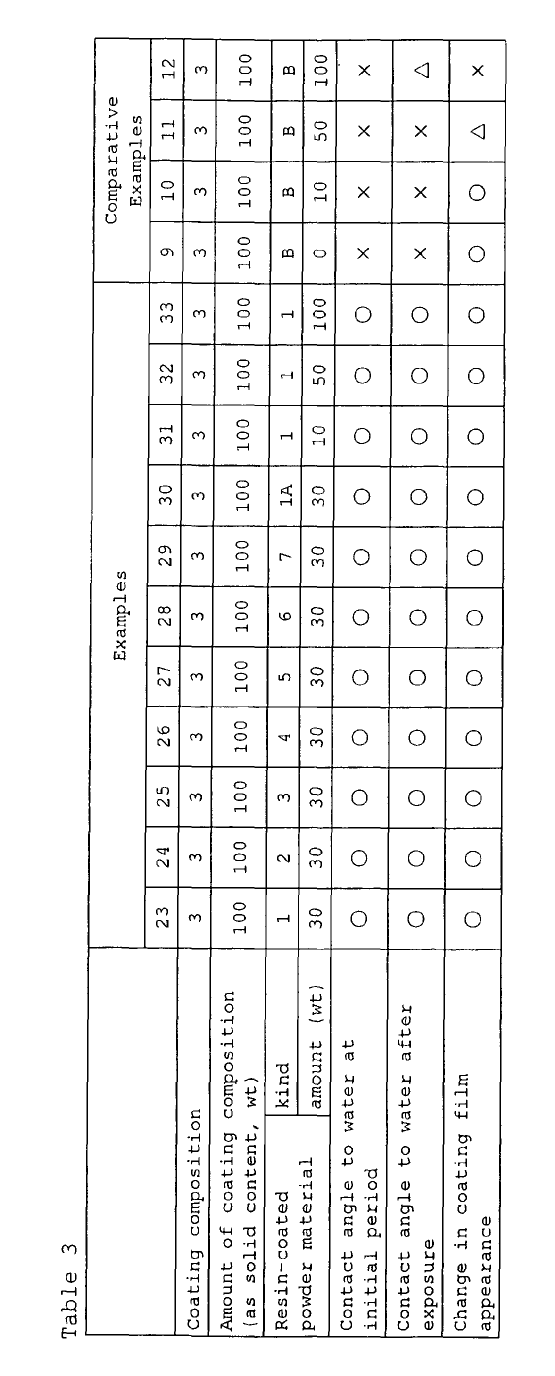

### Examples 34-44 and Comparative Examples 13-16 by use of Coating Composition 4:

Respective coating compositions of Examples 34-44 and Comparative Examples 13-16 having formulations as parts by weight shown in Table 4 were coated onto a zinc phosphate-treated steel plate so as to be a dry film thickness of 80 µm, followed by irradiating ultraviolet light at a dose of 400 mj/cm² by use of a metal halide lamp and curing to form a coating film respectively. Performances of the resulting coating films are shown in Table 4.

### [Table 4]

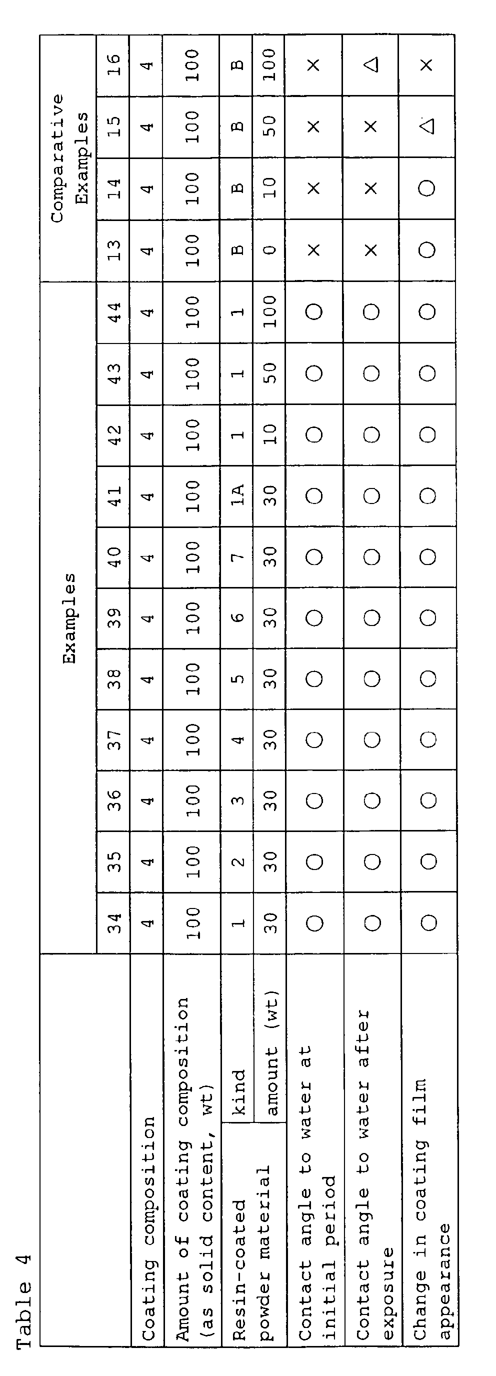

### Examples 45-55 and Comparative Examples 17-20 by use of Coating Composition 5:

Respective coating compositions of Examples 45-55 and Comparative Examples 17-20 having formulations as parts by weight shown in Table 5 were coated onto a zinc phosphate-treated steel plate so as to be a dry film thickness of 80 µm, followed by heating at 100°C for 30 minutes, and curing to form a coating film respectively. Performances of the resulting coating films are shown in Table 5.

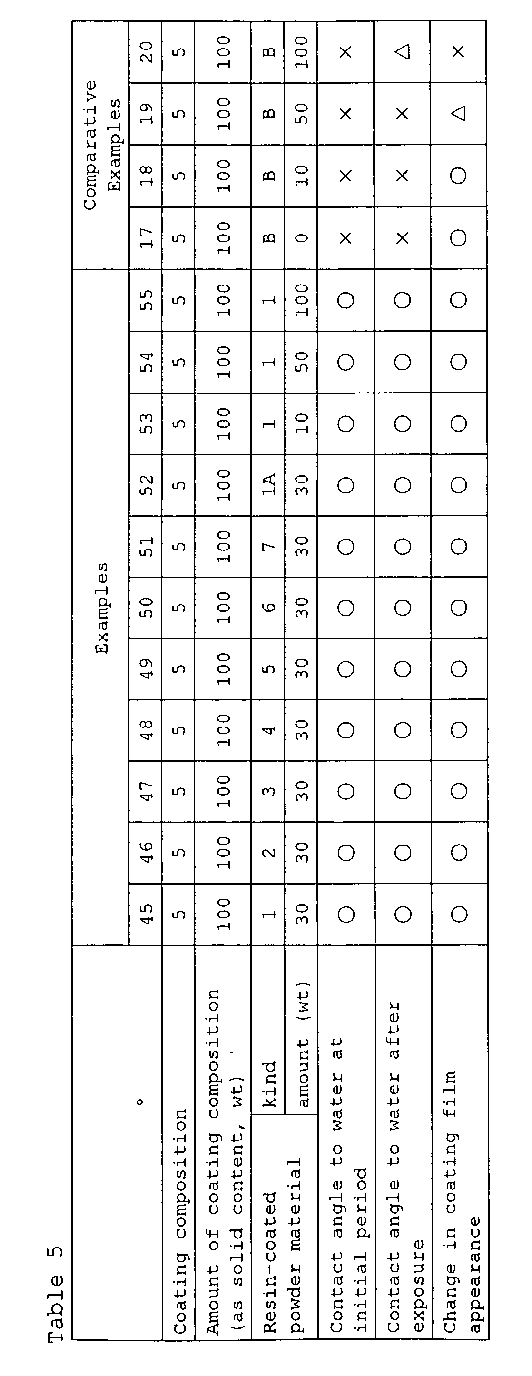

### Example 56

100 parts as solid content of the silicon-containing copolymer 1 was stirred by a disper, followed by adding respectively 5 g, 10 g and 100 g of a needle-like single-crystal inorganic powder, Pana-Tetra (trade name, marketed by Matsushita Electric Industrial Co., Ltd., zinc oxide whisker, tetrapod shape, needle-like short fiber length 2 to 50 µm, needle-like short fiber diameter (mean) 0.2 to 3.0 µm, specific gravity 5.78, as shown in Fig. 1, enlarged three-dimensional schematic view) to obtain respectively a, b, and c coating composition of Example 56.

The above three coating compositions were coated onto an aluminum plate to be 30 µm by spray coating, followed by heating at 100°C for 30 minutes to obtain a coating film respectively.
Results of coating film performances are shown in Table 6.

### Example 57

To 100 parts (as solid content) of the silicon-containing graft copolymer 2 dispersed with agitation was added respectively 10 g, 50 g and 100 g of the needle-like single-crystal inorganic powder as in Example 56, followed by adding 10 parts of isophorone diisocyanate to obtain coating compositions a, b and c of Example 57 respectively.

The above three coating compositions were coated onto a zinc phosphate-treated steel plate to be 80 µm as dry film, followed by heating at 100°C for 30 minutes to obtain respective coating films. Results of coating film performances are shown in Table 6.

### Example 58

To 100 parts (as solid content) of the silicone-fluorocarbon copolymer 1 dispersed with agitation was added respectively 10 g, 50 g and 100 g of the needle-like single-crystal inorganic powder as in Example 56 to obtain coating compositions a, b and c of Example 58 respectively.

The above three coating compositions were coated onto an aluminum plate to be 30 µm by spray coating, followed by heating at 100°C for 30 minutes to obtain a coating film respectively.
Results of coating film performances are shown in Table 6.

### Example 59

To 100 parts (as solid content) of the silicone·fluorocarbon copolymer 2 dispersed with agitation was added respectively 10 g, 50 g and 100 g of the needle-like single-crystal inorganic powder as in Example 56, followed by adding 20 parts of ε-caprolactam-blocked isophorone diisocyanate to obtain coating compositions a, b and c of Example 59 respectively.

The above three coating compositions were coated onto an aluminum plate to be 30 µm by spray coating, followed by heating at 150°C for 30 minutes to obtain a coating film respectively.
Results of coating film performances are shown in Table 6.

### Example 60

To 100 parts (as solid content) of the silicone•fluorocarbon copolymer 3 dispersed with agitation was added respectively 10 g, 50 g and 100 g of the needle-like single-crystal inorganic powder as in Example 56, followed by adding 20 parts of hexamethoxymelamine (trade name, Cymel 300, marketed by Mitsui Cyanamid Co., Ltd.) to obtain coating compositions a, b and c of Example 60 respectively.

The above three coating compositions were coated by spray coating onto a zinc phosphate-treated steel plate to be 30 µm as dry film, followed by heating at 150°C for 30 minutes to obtain respective coating films. Results of coating film performances are shown in Table 6.

### Example 61

To 100 parts (as solid content) of the silicone•fluorocarbon copolymer 4 dispersed with agitation was added respectively 10 g, 50 g and 100 g of the needle-like single-crystal inorganic powder as in Example 56, followed by adding 30 parts of curing agent, Coronate HX (trade name, isocyanurate type prepolymer of hexamethylene diisocyanate, marketed by Nippon Polyurethane Industry Co., Ltd.) to obtain coating compositions a, b and c of Example 61 respectively.

The above three coating compositions were coated onto a zinc phosphate-treated steel plate to be 30 µm as dry film, followed by heating at 170°C for 30 minutes to obtain respective coating films. Results of coating film performances are shown in Table 6.

### Comparative Example 21

To 100 parts (as solid content) of Retan PG-80 Metallic (trade name, marketed by Kansai Paint Co., Ltd., isocyanate-curing curable acrylic resin coating composition) dispersed with agitation was added respectively 10 g, 50 g, and 100 g of the needle-like single-crystal inorganic powder as in Example 56 to obtain coating compositions a, b, and c of Comparative Example 21 respectively.

The resulting three coating compositions were coated onto the surface of a zinc phosphate-treated steel plate so as to be 30 µm, followed by heating at 100°C for 30 minutes to obtain a coating composition respectively. Coating film performances were shown in Table 7.
Test methods in Table 6 and 7 are as follows.
Contact angle to water at initial period:
a water drop was formed on a coating film by dropping 0.03 ml water drop of deionized water onto the surface of the coating film, followed by measuring a contact angle of the water drop by use of a Contactangle meter DCAA marketed by Kyowa Chemical Industry Co., Ltd.
   ○: contact angle 140° or more
   Δ: contact angle 90° to 130°
   ×: less than 90°

Contact angle to water after 3 months exposure was measured in the same manner as above.
Change in cooling film appearance:
Coating film appearance after 3 months exposure was compared with that at initial period.
   ○: no changes
   Δ: changes in gloss results poor gloss
   ×: serious coating film degradations such as cracks, choking, color change developed

[Table 6]

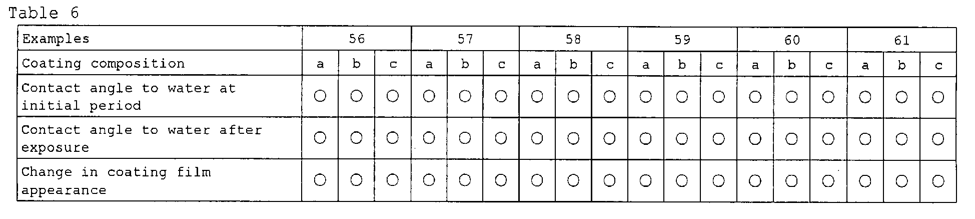

[Table 7]

**Table 7**

| Comparative Examples | 21 | | |
|---|---|---|---|
| Coating composition | a | b | c |
| Contact angle to water at initial period | x | x | x |
| Contact angle to water after exposure | x | x | x |
| Change in coating film appearance | ○ | ○ | ○ |

### Inorganic Powder Dispersion 1

To 100 parts (as solid content) of the silicon-containing copolymer 1 dispersed with agitation was slowly added 50 g of the needle-like single-crystal inorganic powder Pana-Tetra (trade name, marketed by Matsushita Electric Industrial Co., Ltd., zinc oxide whisker, tetrapod shape, needle-like short fiber length 2 to 50 µm, needle-like short fiber diameter (mean) 0.2 to 3.0 µm, specific gravity 5.78), as shown in Fig. 1, enlarged three-dimensional schematic view) to obtain a coating composition comprising inorganic powder dispersion 1.

### Inorganic Powder Dispersion 2

To 100 parts (as solid content) of the silicon-containing copolymer 2 dispersed with agitation was slowly added 50 g of the same needle-like single-crystal inorganic powder as in the inorganic powder dispersion 1, followed by adding 10 parts of isophorone diisocyanate to obtain a coating composition comprising the inorganic powder dispersion 2.

### Inorganic Powder Dispersion 3

To 100 parts (as solid content) of the silicone·fluorocarbon copolymer 1 dispersed with agitation was slowly added 50 g of the same needle-like single-crystal inorganic powder as in the inorganic powder dispersion 1 to obtain a coating composition comprising the inorganic powder dispersion 3.

### Inorganic Powder Dispersion 4

To 100 parts (as solid content) of the silicone·fluorocarbon copolymer 2 dispersed with agitation was slowly added 50 g of the same needle-like single-crystal inorganic powder as in the inorganic powder dispersion 1, followed by adding 20 parts of ε-caprolactam-blocked isophorone diisocyanate to obtain a coating composition comprising the inorganic powder dispersion 4.

### Inorganic Powder Dispersion 5

To 100 parts (as solid content) of the silicone·fluorocarbon copolymer 3 dispersed with agitation was slowly added 50 g of the same needle-like single-crystal inorganic powder as in the inorganic powder dispersion 1, followed by adding 20 parts of hexamethoxymelamine resin (Cymel 300, trade name, marketed by Mitsui Cyanamid Co., Ltd.) to obtain a coating composition comprising the inorganic powder dispersion 5.

### Inorganic Powder Dispersion 6

To 100 parts (as solid content) of the silicone·fluorocarbon copolymer 4 dispersed with agitation was slowly added 50 g of the same needle-like single-crystal inorganic powder as in the inorganic powder dispersion 1 to obtain a coating composition comprising the inorganic powder dispersion 6.

### Example 62

Retan PG-80 Metallic (trade name, marketed by Kansai Paint Co., Ltd., isocyanate-curing acrylic resin coating composition) was coated onto a polypropylene plate so as to be a dry film thickness of 10 µm, dry at 80°C for 20 minutes, coating the inorganic powder dispersion 1 so as to be a dry film thickness of 20 µm, drying at 80°C for 20 minutes to form a coating film of Example 62.

### Example 63

Acric #2000 Metallic (trade name, marketed by Kansai Paint Co., Ltd., acrylic lacquer coating composition) was coated onto an iron plate to be 20 µm by spray coating, followed by coating the inorganic powder dispersion 1 so as to be a dry film thickness of 20 µm, and drying at 80°C for 20 minutes to obtain a coating film of Example 63.

### Example 64

Soflex 1630 Clear (trade name, marketed by Kansai Paint Co., Ltd., melamine-curing acrylic resin clear coating composition) was coated onto an old coating film, followed by drying at 80°C for 20 minutes to form a clear coating film of 20 µm, coating the inorganic powder dispersion 1 so as to be a dry film thickness of 20 µm, and drying at 80°C for 20 minutes to obtain a coating film of Example 64.

### Example 65

KINO #400 Clear (trade name, marketed by Kansai Paint Co., Ltd., acid•epoxy-curing acrylic resin clear coating composition) was coated onto a cured coating film prepared by applying electrodeposition coating and intercoat coating onto an iron, followed by coating the inorganic powder dispersion 1 so as to be a dry film thickness of 20 µm, and drying at 80°C for 20 minutes to obtain a coating film of Example 65.

### Example 66

Example 62 was duplicated except that the inorganic powder dispersion 2 was used in place of the inorganic powder dispersion 1 to obtain a coating film.

### Example 67

Example 62 was duplicated except that the inorganic powder dispersion 3 was used in place of the inorganic powder dispersion 1 to obtain a coating film.

### Example 68

Example 62 was duplicated except that the inorganic powder dispersion 4 was used in place of the inorganic powder dispersion 1 to obtain a coating film.

### Example 69

Example 62 was duplicated except that the inorganic powder dispersion 5 was used in place of the inorganic powder dispersion 1 to obtain a coating film.

### Example 70

Example 62 was duplicated except that the inorganic powder dispersion 6 was used in place of the inorganic powder dispersion 1 to obtain a coating film.

### Example 71

In Example 63, the inorganic powder dispersion 2 was used in place of the inorganic powder dispersion 1, and the same method as in Example 63 was performed to obtain a coating film.

### Example 72

In Example 63, the inorganic powder dispersion 3 was used in place of the inorganic powder dispersion 1, and the same method as in Example 63 was performed to obtain a coating film.

### Example 73

In Example 63, the inorganic powder dispersion 4 was used in place of the inorganic powder dispersion 1, and the same method as in Example 63 was performed to obtain a coating film.

### Example 74

In Example 63, the inorganic powder dispersion 5 was used in place of the inorganic powder dispersion 1, and the same method as in Example 63 was performed to obtain a coating film.

### Example 75

In Example 63, the inorganic powder dispersion 6 was used in place of the inorganic powder dispersion 1, and the same method as in Example 63 was performed to obtain a coating film.

### Example 76

In Example 64, the inorganic powder dispersion 2 was used in place of the inorganic powder dispersion 1, and the same method as in Example 64 was performed to obtain a coating film.

### Example 77

In Example 64, the inorganic powder dispersion 3 was used in place of the inorganic powder dispersion 1, and the same method as in Example 64 was performed to obtain a coating film.

### Example 78

In Example 64, the inorganic powder dispersion 4 was used in place of the inorganic powder dispersion 1, and the same method as in Example 64 was performed to obtain a coating film.

### Example 79

In Example 64, the inorganic powder dispersion 5 was used in place of the inorganic powder dispersion 1, and the same method as in Example 64 was performed to obtain a coating film.

### Example 80

In Example 64, the inorganic powder dispersion 6 was used in place of the inorganic powder dispersion 1, and the same method as in Example 64 was performed to obtain a coating film.

### Example 81

In Example 65, the inorganic powder dispersion 2 was used in place of the inorganic powder dispersion 1, and the same method as in Example 65 was performed to obtain a coating film.

### Example 82

In Example 65, the inorganic powder dispersion 3 was used in place of the inorganic powder dispersion 1, and the same method as in Example 65 was performed to obtain a coating film.

### Example 83

In Example 65, the inorganic powder dispersion 4 was used in place of the inorganic powder dispersion 1, and the same method as in Example 65 was performed to obtain a coating film.

### Example 84

In Example 65, the inorganic powder dispersion 5 was used in place of the inorganic powder dispersion 1, and the same method as in Example 65 was performed to obtain a coating film.

### Example 85

In Example 65, the inorganic powder dispersion 6 was used in place of the inorganic powder dispersion 1, and the same method as in Example 65 was performed to obtain a coating film.

### Comparative Examples 22-25

Examples 62-65 were duplicated except that the inorganic powder dispersion 1 was not used respectively.
Coating film performances are shown in Tables 8 and 9.
Test methods shown in the following Tables are as follows.

Contact angle to water at initial period: a water drop was formed on a coating film by dropping 0.03 ml water drop of deionized water onto the surface of the coating film, followed by measuring a contact angle of the water drop by use of a Contactangle meter DCAA marketed by Kyowa Chemical Industry Co., Ltd.
○: contact angle 140° or more
Δ: contact angle 90° to 130°
×: less than 90°

Contact angle to water after 3 months exposure was measured in the same manner as above.
Change in coating film appearance:
Coating film appearance after 3 months exposure was compared with that at initial period.
   ○: no changes
   Δ: changes in gloss results poor gloss.
   ×: serious coating film degradations such as cracks, choking, color change developed.

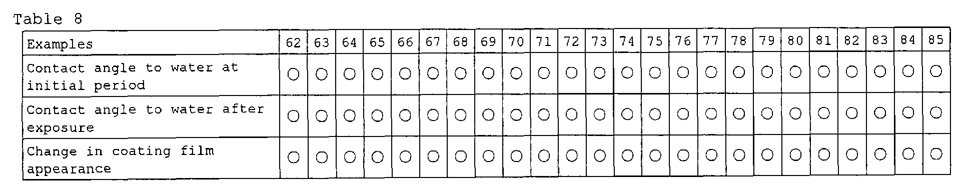

**Table 9**

| Comparative Examples | 22 | 23 | 24 | 25 |
|---|---|---|---|---|
| Contact angle to water at initial period | × | × | × | × |
| Contact angle to water after exposure | × | × | × | × |
| Change in coating film appearance | ○ | ○ | ○ | ○ |

### Industrial Applicability

The present invention is applicable to provide a coating film showing excellent water-repellency and a coating product having the coating film.

## Claims

**1.** A resin-coated powder material prepared by coating a resin onto a needle-like single-crystal inorganic powder.

**2.** A resin-coated powder material as claimed in claim 1, wherein the resin is at least one organic resin selected from a silicone resin and a fluorocarbon resin.

**3.** A resin-coated powder material as claimed in claim 1 or 2, wherein the needle-like single-crystal inorganic powder is a zinc oxide needle-like single-crystal inorganic powder.

**4.** A resin-coated powder material as claimed in any one of claims 1 to 3, wherein the needle-like single-crystal inorganic powder is in a three-dimensional shape having three or more needle-like crystal portions stretched in different directions from a core portion.

**5.** A resin-coated powder material as claimed in any one of claims 1 to 4, wherein a coating amount of the resin relative to the needle-like single-crystal inorganic powder is such that the resin is in the range of 0.001 to 50 parts by weight per 100 parts by weight of the needle-like single-crystal inorganic powder.

**6.** A coating composition prepared by mixing a needle-like single-crystal inorganic powder with a silicone resin coating composition and/or fluorocarbon resin coating composition.

**7.** A coating composition as claimed in claim 6, wherein the needle-like single-crystal inorganic powder is a zinc oxide needle-like single-crystal inorganic powder.

**8.** A coating composition as claimed in claim 6 or 7, wherein the needle-like single-crystal inorganic powder is in a three-dimensional shape having three or more needle-like crystal portions stretched in different directions from a core portion.

**9.** A water-repellent coating film-forming method, which comprises coating the coating composition as claimed in any one of claims 6 to 8 as a topcoat coating composition onto a substrate to form a water-repellent coating film.

**10.** A water-repellent coating product having a topcoat water-repellent coating film formed by the water-repellent coating film-forming method as claimed in claim 9.

**11.** A substrate surface-modifying method, which comprises coating an inorganic powder dispersion containing, as essential components, a needle-like single crystal inorganic powder and a resin onto a substrate to impart water-repellency to the surface of the substrate.

**12.** A substrate surface-modifying method as claimed in claim 11, wherein the substrate is a plastics substrate and/or inorganic substrate.

**13.** A substrate surface-modifying method as claimed in claim 11, wherein the needle-like single-crystal inorganic powder is a zinc oxide needle-like single-crystal inorganic powder.

**14.** A substrate surface-modifying method as claimed in any one of claims 11 to 13, wherein the needle-like single-crystal inorganic powder is in a three-dimensional shape having three or more needle-like crystal portions stretched in different directions from a core portion.

**15.** A substrate surface-modifying method as claimed in any one of claims 11 to 14, wherein the resin used in the inorganic powder dispersion is a silicone resin and/or fluorocarbon resin.

**16.** A substrate surface-modifying method as claimed in any one of claims 11 to 15, wherein the resin used in the inorganic powder dispersion is a curable resin.

**17.** A substrate surface-modifying method as claimed in any one of claims 11 to 16, wherein the plastics substrate or the inorganic substrate is composed of a curable resin coating film.

**18.** A substrate surface-modifying method as claimed in any one of claims 11 to 17, wherein the curable resin coating film prior to coating the inorganic powder dispersion is an uncured coating film, and the uncured coating film is cured after coating the inorganic powder dispersion.

**19.** A substrate surface-modifying method as claimed in any one of claims 11 to 18, wherein the resin used in the inorganic powder dispersion is a curable resin, the substrate is a curable resin coating film, which is an uncured coating film prior to coating the inorganic powder dispersion, and coating of the inorganic powder dispersion is followed by simultaneously curing the uncured curable resin coating film and the curable resin.

**20.** A water-repellent coating product having a topcoat water-repellent coating film formed by the method as claimed in any one of claims 11 to 19.
